# EUROPEAN PATENT SPECIFICATION

(11) **EP 4 147 387 B1**
(45) Date of publication and mention of the grant of the patent: **12.06.2024**
(21) Application number: 21728740.8
(22) Date of filing: 06.05.2021
(51) Int. Cl.: H04J 3/06, H04W 56/00, H04J 3/12, H04L 5/00

(54) **FACILITATING TIME SYNCHRONIZATION FUNCTIONALITY AT USER EQUIPMENT**
BEREITSTELLUNG VON ZEITSYNCHRONISATION FÜR EIN NUTZER-ENDGERÄT
FACILITER LA FONCTIONNALITÉ DE SYNCHRONISATION DU TEMPS AU NIVEAU DE L'ÉQUIPEMENT UTILISATEUR

(30) Priority: 07.05.2020 GR 20200100230
(43) Date of publication of application: 15.03.2023
(73) Proprietor: QUALCOMM INCORPORATED, San Diego, California 92121-1714 (US)
(72) Inventor: SPEICHER, Sebastian, San Diego, California 92121 (US); ZISIMOPOULOS, Haris, San Diego, California 92121 (US)
(74) Representative: Dunlop, Hugh Christopher
(86) International application number: PCT/US2021/031176
(87) International publication number: WO 2021/226394

(56) References cited:
- WO-A1-2016/140792
- WO-A1-2019/006368
- WO-A1-2019/243669
- US-A1- 2013 227 008
- US-B2- 9 690 674

## Description

### BACKGROUND

### Technical Field

The present disclosure relates generally to communication systems, and more particularly, to wireless communication utilizing time synchronization.

### Introduction

Wireless communication systems are widely deployed to provide various telecommunication services such as telephony, video, data, messaging, and broadcasts. Typical wireless communication systems may employ multiple-access technologies capable of supporting communication with multiple users by sharing available system resources. Examples of such multiple-access technologies include code division multiple access (CDMA) systems, time division multiple access (TDMA) systems, frequency division multiple access (FDMA) systems, orthogonal frequency division multiple access (OFDMA) systems, single-carrier frequency division multiple access (SC-FDMA) systems, and time division synchronous code division multiple access (TD-SCDMA) systems.

These multiple access technologies have been adopted in various telecommunication standards to provide a common protocol that enables different wireless devices to communicate on a municipal, national, regional, and even global level. An example telecommunication standard is 5G New Radio (NR). 5G NR is part of a continuous mobile broadband evolution promulgated by Third Generation Partnership Project (3GPP) to meet new requirements associated with latency, reliability, security, scalability (e.g., with Internet of Things (IoT)), and other requirements. 5G NR includes services associated with enhanced mobile broadband (eMBB), massive machine type communications (mMTC), and ultra-reliable low latency communications (URLLC). Some aspects of 5G NR may be based on the 4G Long Term Evolution (LTE) standard. There exists a need for further improvements in 5G NR technology. These improvements may also be applicable to other multi-access technologies and the telecommunication standards that employ these technologies.

WO 2019/243669 A1 discusses systems, methods, apparatuses, and computer program products for supporting precision timing protocol (PTP) based time sensitive network (TSN) applications. WO 2019/006368 A1 discusses a method in which a UE may configure, based at least in part on a timing synchronization signal, a timer function of the UE as a PTP server. WO 2016/140792 A1 discusses methods and systems for synchronizing clocks maintained at different devices in a wireless communication network.

### SUMMARY

The invention is defined by the independent claims. Advantageous embodiments are set out in the dependent claims. The following presents a simplified summary of one or more aspects in order to provide a basic understanding of such aspects. This summary is not an extensive overview of all contemplated aspects, and is intended to neither identify key or critical elements of all aspects nor delineate the scope of any or all aspects. Its sole purpose is to present some concepts of one or more aspects in a simplified form as a prelude to the more detailed description that is presented later.

In an aspect of the disclosure, a method, a computer-readable medium, and an apparatus are provided for wireless communication. Aspects of the apparatus may be implemented by a user equipment (UE) and/or a device-side time sensitive networking translator (DS-TT). An example apparatus may transmit, to a first device, capability information indicating that the apparatus is capable of operating as a precision time protocol (PTP) grand master clock. The example apparatus may also receive, from the first device, one or more PTP parameters based on the capability information indicating that the apparatus is capable of operating as a PTP grand master clock. Additionally, the example apparatus may generate, based on the one or more PTP parameters received from the first device, a first PTP message including time information. Further, the example apparatus may transmit the first PTP message including the network-corrected time to one or more downstream devices in communication with the first device.

In another aspect of the disclosure, a method, a computer-readable medium, and an apparatus are provided for wireless communication. Aspects of the apparatus may be implemented by a UE and/or a base station. An example apparatus may receive, from a first device, capability information indicating that the first device is capable of operating as a PTP grand master clock. The example apparatus may also transmit, based on the received capability information, one or more PTP parameters to the first device. Additionally, the example apparatus may transmit, to the first device, an activation message to enable the first device to transmit, based on the one or more PTP parameters, PTP messages to one or more downstream devices in communication with the second device, the PTP messages including time information.

To the accomplishment of the foregoing and related ends, the one or more aspects comprise the features hereinafter fully described and particularly pointed out in the claims. The following description and the annexed drawings set forth in detail certain illustrative features of the one or more aspects. These features are indicative, however, of but a few of the various ways in which the principles of various aspects may be employed, and this description is intended to include all such aspects and their equivalents.

### BRIEF DESCRIPTION OF THE DRAWINGS

FIG. 1 is a diagram illustrating an example of a wireless communications system and an access network.
FIG. 2A is a diagram illustrating an example of a first frame, in accordance with various aspects of the present disclosure.
FIG. 2B is a diagram illustrating an example of DL channels within a subframe, in accordance with various aspects of the present disclosure.
FIG. 2C is a diagram illustrating an example of a second frame, in accordance with various aspects of the present disclosure.
FIG. 2D is a diagram illustrating an example of UL channels within a subframe, in accordance with various aspects of the present disclosure.
FIG. 3 is a diagram illustrating an example of a base station and a user equipment (UE) in an access network.
FIG. 4 is a diagram illustrating an example of a time sensitive networking (TSN) system, in accordance with various aspects of this disclosure.
FIG. 5 is an example communication flow between a base station, a UE, a DS-TT, and downstream device(s), in accordance with various aspects of this disclosure.
FIG. 6 is an example communication flow between a base station, a UE, and downstream device(s), in accordance with various aspects of this disclosure.
FIG. 7 is a flowchart of a method of wireless communication, in accordance with various aspects of this disclosure.
FIG. 8 is a flowchart of a method of wireless communication, in accordance with various aspects of this disclosure.
FIG. 9 is a diagram illustrating an example of a hardware implementation for an example apparatus, in accordance with the teachings disclosed herein.
FIG. 10 is a flowchart of a method of wireless communication, in accordance with various aspects of this disclosure.
FIG. 11 is a flowchart of a method of wireless communication, in accordance with various aspects of this disclosure.
FIG. 12 is a diagram illustrating an example of a hardware implementation for an example apparatus, in accordance with the teachings disclosed herein.

### DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well known structures and components are shown in block diagram form in order to avoid obscuring such concepts.

Several aspects of telecommunication systems will now be presented with reference to various apparatus and methods. These apparatus and methods will be described in the following detailed description and illustrated in the accompanying drawings by various blocks, components, circuits, processes, algorithms, etc. (collectively referred to as "elements"). These elements may be implemented using electronic hardware, computer software, or any combination thereof. Whether such elements are implemented as hardware or software depends upon the particular application and design constraints imposed on the overall system.

By way of example, an element, or any portion of an element, or any combination of elements may be implemented as a "processing system" that includes one or more processors. Examples of processors include microprocessors, microcontrollers, graphics processing units (GPUs), central processing units (CPUs), application processors, digital signal processors (DSPs), reduced instruction set computing (RISC) processors, systems on a chip (SoC), baseband processors, field programmable gate arrays (FPGAs), programmable logic devices (PLDs), state machines, gated logic, discrete hardware circuits, and other suitable hardware configured to perform the various functionality described throughout this disclosure. One or more processors in the processing system may execute software. Software shall be construed broadly to mean instructions, instruction sets, code, code segments, program code, programs, subprograms, software components, applications, software applications, software packages, routines, subroutines, objects, executables, threads of execution, procedures, functions, etc., whether referred to as software, firmware, middleware, microcode, hardware description language, or otherwise.

Accordingly, in one or more example aspects, the functions described may be implemented in hardware, software, or any combination thereof. If implemented in software, the functions may be stored on or encoded as one or more instructions or code on a computer-readable medium. Computer-readable media includes computer storage media. Storage media may be any available media that can be accessed by a computer. By way of example, and not limitation, such computer-readable media can comprise a random-access memory (RAM), a read-only memory (ROM), an electrically erasable programmable ROM (EEPROM), optical disk storage, magnetic disk storage, other magnetic storage devices, combinations of the types of computer-readable media, or any other medium that can be used to store computer executable code in the form of instructions or data structures that can be accessed by a computer.

While aspects and implementations are described in this application by illustration to some examples, those skilled in the art will understand that additional implementations and use cases may come about in many different arrangements and scenarios. Innovations described herein may be implemented across many differing platform types, devices, systems, shapes, sizes, and packaging arrangements. For example, implementations and/or uses may come about via integrated chip implementations and other non-module-component based devices (e.g., end-user devices, vehicles, communication devices, computing devices, industrial equipment, retail/purchasing devices, medical devices, artificial intelligence (AI)-enabled devices, etc.). While some examples may or may not be specifically directed to use cases or applications, a wide assortment of applicability of described innovations may occur. Implementations may range a spectrum from chip-level or modular components to non-modular, non-chip-level implementations and further to aggregate, distributed, or original equipment manufacturer (OEM) devices or systems incorporating one or more aspects of the described innovations. In some practical settings, devices incorporating described aspects and features may also include additional components and features for implementation and practice of claimed and described aspect. For example, transmission and reception of wireless signals necessarily includes a number of components for analog and digital purposes (e.g., hardware components including antenna, RF-chains, power amplifiers, modulators, buffer, processor(s), interleaver, adders/summers, etc.). It is intended that innovations described herein may be practiced in a wide variety of devices, chip-level components, systems, distributed arrangements, aggregated or disaggregated components, end-user devices, etc. of varying sizes, shapes, and constitution.

Time sensitive communication includes transmission of time-sensitive (e.g., deterministic) data over a network. For example, deterministic data comprises data that arrives at a device at a specific time to be processed by the device. If the data does not arrive at its intended destination at the right time, undesired results may occur at the device. Thus, deterministic data may be referred to as time-sensitive data. Time sensitive communication may occur using 5G systems (5GS). In some examples, the 5G system may include time sensitive networking (TSN) translators (TTs) to facilitate functions related to the precision time protocol (PTP). For example, a radio access network (RAN) may provide 5GS time to user equipment (UEs) using signaling. A network TT (NW-TT) timestamps the PTP message with an ingress timestamp and forwards the timestamped PTP message to a UE. The UE may then forward the timestamped PTP message to a device-side TT (DS-TT), which then calculates a delta based on a difference between the ingress timestamp and the current 5GS system time. Based on the delta, the DS-TT may then modify the payload of the PTP message before forwarding the PTP message to downstream devices (e.g., one or more TSN devices) connected to the DS-TT.

It may be appreciated that such a system for creating time sensitive messages for TSN devices may consume resources at the UE and the network. For example, over-the-air resources are used for communicating the PTP message from the network to the UE. Additionally, processing resources are used at the NW-TT and the DS-TT in determining deltas for messages as they are relayed across the RAN to the UE.

Example techniques disclosed herein enable a UE and/or a DS-TT to operate as a PTP grand master clock. Disclosed examples enable the UE / DS-TT to indicate to the network that the UE / DS-TT is capable of operating as a PTP grand master clock and which version of PTP the UE /DS-TT supports. Disclosed techniques also enable the network to provide PTP parameters to the UE / DS-TT. Additionally, disclosed techniques enable the network to activate and/or deactivate the PTP grand master clock functionality of the UE / DS-TT.

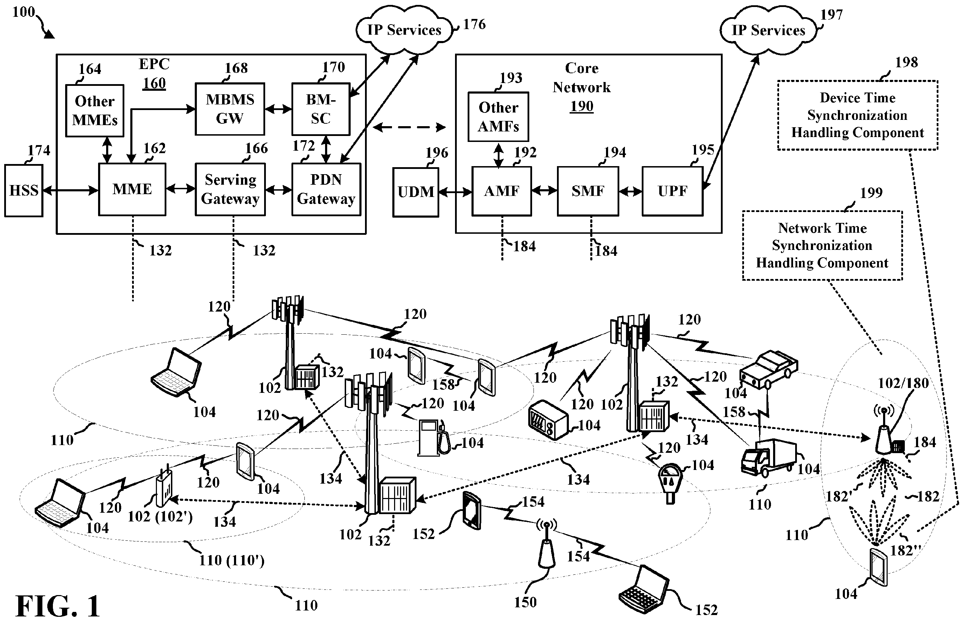

FIG. 1 is a diagram illustrating an example of a wireless communications system and an access network 100 including base stations 102 and 180 and UEs 104.

In certain aspects, a device in communication with a base station, such as a UE 104, may be configured to manage one or more aspects of wireless communication by facilitating time synchronization functionality. For example, the device may include a device time synchronization handling component 198 configured to indicate PTP support and/or the capability of operating as a PTP grand master clock.

In certain aspects, the device time synchronization handling component 198 may be configured to transmit, to a second device, capability information indicating that the device is capable of operating as a PTP grand master clock. The device time synchronization handling component 198 may also be configured to receive, from the second device, one or more PTP parameters based on the capability information indicating that the device is capable of operating as a PTP grand master clock. Additionally, the device time synchronization handling component 198 may be configured to generate, based on the one or more PTP parameters received from the second device, a first PTP message including time information. Further, the device time synchronization handling component 198 may be configured to transmit the first PTP message including the time information to one or more downstream devices in communication with the first device.

Still referring to FIG. 1, in certain aspects, the base station 102/180 may be configured to manage one or more aspects of wireless communication by facilitating time synchronization functionality at a device, such as the UE 104. For example, the base station 102/180 may include a network time synchronization handling component 199 configured to provide PTP parameters to the device and/or to activate/deactivate PTP functionality at the device.

In certain aspects, the network time synchronization handling component 199 may be configured to receive, from a first device, capability information indicating that the first device is capable of operating as a PTP grand master clock. Further, the network time synchronization handling component 199 may be configured to transmit, based on the received capability information, one or more PTP parameters to the first device. Additionally, the network time synchronization handling component 199 may be configured to transmit, to the first device, an activation message to enable the first device to transmit, based on the one or more PTP parameters, PTP messages to one or more downstream devices in communication with the first device, the PTP messages including time information.

Although the following description may be focused on 5G NR, the concepts described herein may be applicable to other similar areas, such as LTE, LTE-A, CDMA, GSM, and other wireless technologies in which time sensitive communication may be beneficial.

The example of the wireless communications system of FIG. 1 (also referred to as a wireless wide area network (WWAN)) includes the base stations 102, the UEs 104, an Evolved Packet Core (EPC) 160, and another core network 190 (e.g., a 5G Core (5GC)). The base stations 102 may include macrocells (high power cellular base station) and/or small cells (low power cellular base station). The macrocells include base stations. The small cells include femtocells, picocells, and microcells.

The base stations 102 configured for 4G LTE (collectively referred to as Evolved Universal Mobile Telecommunications System (UMTS) Terrestrial Radio Access Network (E-UTRAN)) may interface with the EPC 160 through first backhaul links 132 (e.g., S1 interface). The base stations 102 configured for 5G NR (collectively referred to as Next Generation RAN (NG-RAN)) may interface with core network 190 through second backhaul links 184. In addition to other functions, the base stations 102 may perform one or more of the following functions: transfer of user data, radio channel ciphering and deciphering, integrity protection, header compression, mobility control functions (e.g., handover, dual connectivity), inter-cell interference coordination, connection setup and release, load balancing, distribution for non-access stratum (NAS) messages, NAS node selection, synchronization, radio access network (RAN) sharing, multimedia broadcast multicast service (MBMS), subscriber and equipment trace, RAN information management (RIM), paging, positioning, and delivery of warning messages. The base stations 102 may communicate directly or indirectly (e.g., through the EPC 160 or core network 190) with each other over third backhaul links 134 (e.g., X2 interface). The first backhaul links 132, the second backhaul links 184, and the third backhaul links 134 may be wired or wireless.

The base stations 102 may wirelessly communicate with the UEs 104. Each of the base stations 102 may provide communication coverage for a respective geographic coverage area 110. There may be overlapping geographic coverage areas 110. For example, the small cell 102' may have a coverage area 110' that overlaps the coverage area 110 of one or more macro base stations 102. A network that includes both small cell and macrocells may be known as a heterogeneous network. A heterogeneous network may also include Home Evolved Node Bs (eNBs) (HeNBs), which may provide service to a restricted group known as a closed subscriber group (CSG). The communication links 120 between the base stations 102 and the UEs 104 may include uplink (UL) (also referred to as reverse link) transmissions from a UE 104 to a base station 102 and/or downlink (DL) (also referred to as forward link) transmissions from a base station 102 to a UE 104. The communication links 120 may use multiple-in put and multiple-output (MIMO) antenna technology, including spatial multiplexing, beamforming, and/or transmit diversity. The communication links may be through one or more carriers. The base stations 102 / UEs 104 may use spectrum up to Y MHz (e.g., 5, 10, 15, 20, 100, 400, etc. MHz) bandwidth per carrier allocated in a carrier aggregation of up to a total of Yx MHz (x component carriers) used for transmission in each direction. The carriers may or may not be adjacent to each other. Allocation of carriers may be asymmetric with respectto DL and UL (e.g., more or fewer carriers may be allocated for DL than for UL). The component carriers may include a primary component carrier and one or more secondary component carriers. A primary component carrier may be referred to as a primary cell (PCell) and a secondary component carrier may be referred to as a secondary cell (SCell).

Certain UEs 104 may communicate with each other using device-to-device (D2D) communication link 158. The D2D communication link 158 may use the DL/UL WWAN spectrum. The D2D communication link 158 may use one or more sidelink channels, such as a physical sidelink broadcast channel (PSBCH), a physical sidelink discovery channel (PSDCH), a physical sidelink shared channel (PSSCH), and a physical sidelink control channel (PSCCH). D2D communication may be through a variety of wireless D2D communications systems, such as for example, WiMedia, Bluetooth, ZigBee, Wi-Fi based on the Institute of Electrical and Electronics Engineers (IEEE) 802.11 standard, LTE, or NR.

The wireless communications system may further include a Wi-Fi access point (AP) 150 in communication with Wi-Fi stations (STAs) 152 via communication links 154, e.g., in a 5 GHz unlicensed frequency spectrum or the like. When communicating in an unlicensed frequency spectrum, the STAs 152 / AP 150 may perform a clear channel assessment (CCA) prior to communicating in order to determine whether the channel is available.

The small cell 102' may operate in a licensed and/or an unlicensed frequency spectrum. When operating in an unlicensed frequency spectrum, the small cell 102' may employ NR and use the same unlicensed frequency spectrum (e.g., 5 GHz, or the like) as used by the Wi-Fi AP 150. The small cell 102', employing NR in an unlicens e d frequency spectrum, may boost coverage to and/or increase capacity of the access network.

The electromagnetic spectrum is often subdivided, based on frequency/wavelength, into various classes, bands, channels, etc. In 5G NR, two initial operating bands have been identified as frequency range designations FR1 (410 MHz - 7.125 GHz) and FR2 (24.25 GHz - 52.6 GHz). Although a portion of FR1 is greater than 6 GHz, FR1 is often referred to (interchangeably) as a "sub-6 GHz" band in various documents and articles. A similar nomenclature issue sometimes occurs with regard to FR2, which is often referred to (interchangeably) as a "millimeter wave" band in documents and articles, despite being different from the extremely high frequency (EHF) band (30 GHz - 300 GHz) which is identified by the International Telecommunications Union (ITU) as a "millimeter wave" band.

The frequencies between FR1 and FR2 are often referred to as mid-band frequencies. Recent 5G NR studies have identified an operating band for these mid-band frequencies as frequency range designation FR3 (7.125 GHz - 24.25 GHz). Frequency bands falling within FR3 may inherit FR1 characteristics and/or FR2 characteristics, and thus may effectively extend features of FR1 and/or FR2 into mid-band frequencies. In addition, higher frequency bands are currently being explored to extend 5G NR operation beyond 52.6 GHz. For example, three higher operating bands have been identified as frequency range designations FR4a or FR4-1 (52.6 GHz - 71 GHz), FR4 (52.6 GHz - 114.25 GHz), and FR5 (114.25 GHz - 300 GHz). Each of these higher frequency bands falls within the EHF band.

With the above aspects in mind, unless specifically stated otherwise, it should be understood that the term "sub-6 GHz" or the like if used herein may broadly represent frequencies that may be less than 6 GHz, may be within FR1, or may include mid-band frequencies. Further, unless specifically stated otherwise, it should be understood that the term "millimeter wave" or the like if used herein may broadly represent frequencies that may include mid-band frequencies, may be within FR2, FR4, FR4-a or FR4-1, and/or FR5, or may be within the EHF band.

A base station 102, whether a small cell 102' or a large cell (e.g., macro base station), may include and/or be referred to as an eNB, gNodeB (gNB), or another type of base station. Some base stations, such as gNB 180 may operate in a traditional sub 6 GHz spectrum, in millimeter wave frequencies, and/or near millimeter wave frequencies in communication with the UE 104. When the gNB 180 operates in millimeter wave or near millimeter wave frequencies, the gNB 180 may be referred to as a millimeter wave base station. The millimeter wave base station 180 may utilize beamforming 182 with the UE 104 to compensate for the path loss and short range. The base station 180 and the UE 104 may each include a plurality of antennas, such as antenna elements, antenna panels, and/or antenna arrays to facilitate the beamforming.

The base station 180 may transmit a beamformed signal to the UE 104 in one or more transmit directions 182'. The UE 104 may receive the beamformed signal from the base station 180 in one or more receive directions 182". The UE 104 may also transmit a beamformed signal to the base station 180 in one or more transmit directions. The base station 180 may receive the beamformed signal from the UE 104 in one or more receive directions. The base station 180 / UE 104 may perform beam training to determine the best receive and transmit directions for each of the base station 180 / UE 104. The transmit and receive directions for the base station 180 may or may not be the same. The transmit and receive directions for the UE 104 may or may not be the same.

The EPC 160 may include a Mobility Management Entity (MME) 162, other MMEs 164, a Serving Gateway 166, a Multimedia Broadcast Multicast Service (MBMS) Gateway 168, a Broadcast Multicast Service Center (BM-SC) 170, and a Packet Data Network (PDN) Gateway 172. The MME 162 may be in communication with a Home Subscriber Server (HSS) 174. The MME 162 is the control node that processes the signaling between the UEs 104 and the EPC 160. Generally, the MME 162 provides bearer and connection management. All user Internet protocol (IP) packets are transferred through the Serving Gateway 166, which itself is connected to the PDN Gateway 172. The PDN Gateway 172 provides UE IP address allocation as well as other functions. The PDN Gateway 172 and the BM-SC 170 are connected to the IP Services 176. The IP Services 176 may include the Internet, an intranet, an IP Multimedia Subsystem (IMS), a PS Streaming Service, and/or other IP services. The BM-SC 170 may provide functions for MBMS user service provisioning and delivery. The BM-SC 170 may serve as an entry point for content provider MBMS transmission, may be used to authorize and initiate MBMS Bearer Services within a public land mobile network (PLMN), and may be used to schedule MBMS transmissions. The MBMS Gateway 168 may be used to distribute MBMS traffic to the base stations 102 belonging to a Multicast Broadcast Single Frequency Network (MBSFN) area broadcasting a particular service, and may be responsible for session management (start/stop) and for collecting eMBMS related charging information.

The core network 190 may include an Access and Mobility Management Function (AMF) 192, other AMFs 193, a Session Management Function (SMF) 194, and a User Plane Function (UPF) 195. The AMF 192 may be in communication with a Unified Data Management (UDM) 196. The AMF 192 is the control node that processes the signaling between the UEs 104 and the core network 190. Generally, the AMF 192 provides QoS flow and session management. All user Internet protocol (IP) packets are transferred through the UPF 195. The UPF 195 provides UEIP address allocation as well as other functions. The UPF 195 is connected to the IP Services 197. The IP Services 197 may include the Internet, an intranet, an IP Multimedia Subsystem (IMS), a Packet Switch (PS) Streaming (PSS) Service, and/or other IP services.

The base station may include and/or be referred to as a gNB, Node B, eNB, an access point, a base transceiver station, a radio base station, a radio transceiver, a transceiver function, a basic service set (BSS), an extended service set (ESS), a transmit reception point (TRP), or some other suitable terminology. The base station 102 provides an access point to the EPC 160 or core network 190 for a UE 104. Examples of UEs 104 include a cellular phone, a smart phone, a session initiation protocol (SIP) phone, a laptop, a personal digital assistant (PDA), a satellite radio, a global positioning system, a multimedia device, a video device, a digital audio player (e.g., MP3 player), a camera, a game console, a tablet, a smart device, a wearable device, a vehicle, an electric meter, a gas pump, a large or small kitchen appliance, a healthcare device, an implant, a sensor/actuator, a display, or any other similar functioning device. Some of the UEs 104 may be referred to as IoT devices (e.g., parking meter, gas pump, toaster, vehicles, heart monitor, etc.). The UE 104 may also be referredto as a station, a mobile station, a subscriber station, a mobile unit, a subscriber unit, a wireless unit, a remote unit, a mobile device, a wireless device, a wireless communications device, a remote device, a mobile subscriber station, an access terminal, a mobile terminal, a wireless terminal, a remote terminal, a handset, a user agent, a mobile client, a client, or some other suitable terminology. In some scenarios, the term UE may also apply to one or more companion devices such as in a device constellation arrangement. One or more of these devices may collectively access the network and/or individually access the network.

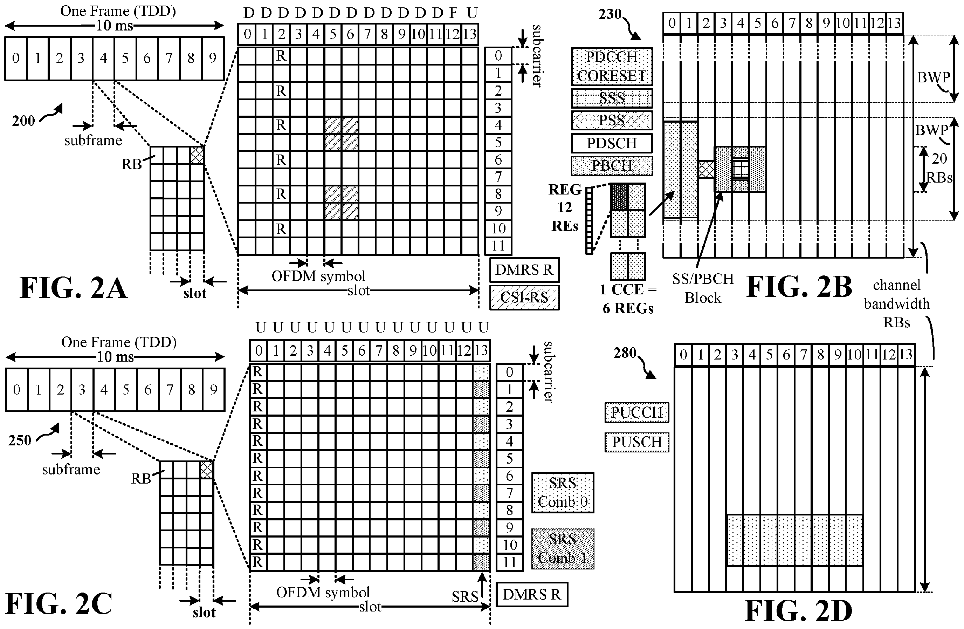

FIG. 2A is a diagram 200 illustrating an example of a first subframe within a 5G NR frame structure. FIG. 2B is a diagram 230 illustrating an example of DL channels within a 5G NR subframe. FIG. 2C is a diagram 250 illustrating an example of a second subframe within a 5G NR frame structure. FIG. 2D is a diagram 280 illustrating an example of UL channels within a 5G NR subframe. The 5G NR frame structure may be frequency division duplexed (FDD) in which for a particular set of subcarriers (carrier system bandwidth), subframes within the set of subcarriers are dedicated for either DL or UL, or may be time division duplexed (TDD) in which for a particular set of subcarriers (carrier system bandwidth), subframes within the set of subcarriers are dedicated for both DL and UL. In the examples provided by FIGs. 2A, 2C, the 5G NR frame structure is assumed to be TDD, with subframe 4 being configured with slot format 28 (with mostly DL), where D is DL, U is UL, and F is flexible for use between DL/UL, and subframe 3 being configured with slot format 1 (with all UL). While subframes 3, 4 are shown with slot formats 1, 28, respectively, any particular subframe may be configured with any of the various available slot formats 0-61. Slot formats 0, 1 are all DL, UL, respectively. Other slot formats 2-61 include a mix of DL, UL, and flexible symbols. UEs are configured with the slot format (dynamically through DL control information (DCI), or semi-statically/statically through radio resource control (RRC) signaling) through a received slot format indicator (SFI). Note that the description *infra* applies also to a 5G NR frame structure that is TDD.

FIGs. 2A-2D illustrate a frame structure, and the aspects of the present disclosure may be applicable to other wireless communication technologies, which may have a different frame structure and/or different channels. A frame (10 ms) may be divided into 10 equally sized subframes (1 ms). Each subframe may include one or more time slots. Subframes may also include mini-slots, which may include 7, 4, or 2 symbols. Each slot may include 14 or 12 symbols, depending on whether the cyclic prefix (CP) is normal or extended. For normal CP, each slot may include 14 symbols, and for extended CP, each slot may include 12 symbols. The symbols on DL may be CP orthogonal frequency division multiplexing (OFDM) (CP-OFDM) symbols. The symbols on UL may be CP-OFDM symbols (for high throughput scenarios) or discrete Fourier transform (DFT) spread OFDM (DFT-s-OFDM) symbols (also referred to as single carrier frequency-division multiple access (SC-FDMA) symbols) (for power limited scenarios; limited to a single stream transmission). The number of slots within a subframe is based on the CP and the numerology. The numerology defines the subcarrier spacing (SCS) and, effectively, the symbol length/duration, which is equal to 1/SCS.

| **µ** | **SCS** | **Cycle prefix** |
|---|---|---|
| | Δ*f* = 2*^{µ}* · 15[kHz] | |
| 0 | 15 | Normal |
| 1 | 30 | Normal |
| 2 | 60 | Normal, Extended |
| 3 | 120 | Normal |
| 4 | 240 | Normal |

For normal CP (14 symbols/slot), different numerologies µ 0 to 4 allow for 1, 2, 4, 8, and 16 slots, respectively, per subframe. For extended CP, the numerology 2 allows for 4 slots per subframe. Accordingly, for normal CP and numerology µ, there are 14 symbols/slot and 2^{µ} slots/subframe. The subcarrier spacing may be equal to 2*^{µ}* * 15 kHz, where *µ* is the numerology 0 to 4. As such, the numerology µ=0 has a subcarrier spacing of 15 kHz and the numerology µ=4 has a subcarrier spacing of 240 kHz. The symbol length/duration is inversely related to the subcarrier spacing. FIGs. 2A-2D provide an example of normal CP with 14 symbols per slot and numerology µ=2 with 4 slots per subframe. The slot duration is 0.25 ms, the subcarrier spacing is 60 kHz, and the symbol duration is approximately 16.67 µs. Within a set of frames, there may be one or more different bandwidth parts (BWPs) (see FIG. 2B) that are frequency division multiplexed. Each BWP may have a particular numerology and CP (normal or extended).

A resource grid may be used to represent the frame structure. Each time slot includes a resource block (RB) (also referred to as physical RBs (PRBs)) that extends 12 consecutive subcarriers. The resource grid is divided into multiple resource elements (REs). The number of bits carried by each RE depends on the modulation scheme.

As illustrated in FIG. 2A, some of the REs carry reference (pilot) signals (RS) for the UE. The RS may include demodulation RS (DM-RS) (indicated as R for one particular configuration, but other DM-RS configurations are possible) and channel state information reference signals (CSI-RS) for channel estimation at the UE. The RS may also include beam measurement RS (BRS), beam refinement RS (BRRS), and phase tracking RS (PT-RS).

FIG. 2B illustrates an example of various DL channels within a subframe of a frame. The physical downlink control channel (PDCCH) carries DCI within one or more control channel elements (CCEs) (e.g., 1, 2, 4, 8, or 16 CCEs), each CCE including six RE groups (REGs), each REG including 12 consecutive REs in an OFDM symbol of an RB. A PDCCH within one BWP may be referred to as a control resource set (CORESET). A UE is configured to monitor PDCCH candidates in a PDCCH search space (e.g., common search space, UE-specific search space) during PDCCH monitoring occasions on the CORESET, where the PDCCH candidates have different DCI formats and different aggregation levels. Additional BWPs may be located at greater and/or lower frequencies across the channel bandwidth. A primary synchronization signal (PSS) may be within symbol 2 of particular subframes of a frame. The PSS is used by a UE 104 to determine subframe/symbol timing and a physical layer identity. A secondary synchronization signal (SSS) may be within symbol 4 of particular subframes of a frame. The SSS is used by a UE to determine a physical layer cell identity group number and radio frame timing. Based on the physical layer identity and the physical layer cell identity group number, the UE can determine a physical cell identifier (PCI). Based on the PCI, the UE can determine the locations of the DM-RS. The physical broadcast channel (PBCH), which carries a master information block (MIB), may be logically grouped with the PSS and SSS to form a synchronization signal (SS)/PBCH block (also referred to as SS block (SSB)). The MIB provides a number of RBs in the system bandwidth and a system frame number (SFN). The physical downlink shared channel (PDSCH) carries user data, broadcast system information not transmitted through the PBCH such as system information blocks (SIBs), and paging messages.

As illustrated in FIG. 2C, some of the REs carry DM-RS (indicated as R for one particular configuration, but other DM-RS configurations are possible) for channel estimation at the base station. The UE may transmit DM-RS for the physical uplink control channel (PUCCH) and DM-RS for the physical uplink shared channel (PUSCH). The PUSCH DM-RS may be transmitted in the first one or two symbols of the PUSCH. The PUCCH DM-RS may be transmitted in different configurations depending on whether short or long PUCCHs are transmitted and depending on the particular PUCCH format used. The UE may transmit sounding reference signals (SRS). The SRS may be transmitted in the last symbol of a subframe. The SRS may have a comb structure, and a UE may transmit SRS on one of the combs. The SRS may be used by a base station for channel quality estimation to enable frequency-dependent scheduling on the UL.

FIG. 2D illustrates an example of various UL channels within a subframe of a frame. The PUCCH may be located as indicated in one configuration. The PUCCH carries uplink control information (UCI), such as scheduling requests, a channel quality indicator (CQI), a precoding matrix indicator (PMI), a rank indicator (RI), and hybrid automatic repeat request (HARQ) acknowledgment (ACK) (HARQ-ACK) information (ACK / negative ACK (NACK)) feedback. The PUSCH carries data, and may additionally be used to carry a buffer status report (BSR), a power headroom report (PHR), and/or UCI.

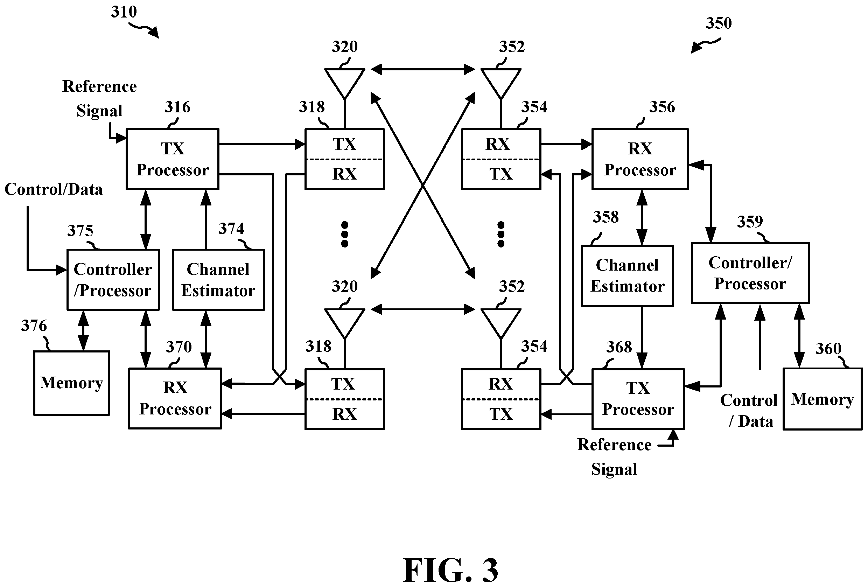

FIG. 3 is a block diagram of a base station 310 in communication with a UE 350 in an access network. In the DL, IP packets from the EPC 160 may be provided to a controller/processor 375. The controller/processor 375 implements layer 3 and layer 2 functionality. Layer 3 includes a radio resource control (RRC) layer, and layer 2 includes a service data adaptation protocol (SDAP) layer, a packet data convergence protocol (PDCP) layer, a radio link control (RLC) layer, and a medium access control (MAC) layer. The controller/processor 375 provides RRC layer functionality associated with broadcasting of system information (e.g., MIB, SIBs), RRC connection control (e.g., RRC connection paging, RRC connection establishment, RRC connection modification, and RRC connection release), inter radio access technology (RAT) mobility, and measurement configuration for UE measurement reporting; PDCP layer functionality associated with header compression / decompression, security (ciphering, deciphering, integrity protection, integrity verification), and handover support functions; RLC layer functionality associated with the transfer of upper layer packet data units (PDUs), error correction through ARQ, concatenation, segmentation, and reassembly of RLC service data units (SDUs), re-segmentation of RLC data PDUs, and reordering of RLC data PDUs; and MAC layer functionality associated with mapping between logical channels and transport channels, multiplexing of MAC SDUs onto transport blocks (TBs), demultiplexing of MAC SDUs from TBs, scheduling information reporting, error correction through HARQ, priority handling, and logical channel prioritization.

The transmit (TX) processor (e.g., a TX processor 316) and the receive (RX) processor (e.g., an RX processor 370) implement layer 1 functionality associated with various signal processing functions. Layer 1, which includes a physical (PHY) layer, may include error detection on the transport channels, forward error correction (FEC) coding/decoding of the transport channels, interleaving, rate matching, mapping onto physical channels, modulation/demodulation of physical channels, and MIMO antenna processing. The TX processor 316 handles mapping to signal constellations based on various modulation schemes (e.g., binary phase-shift keying (BPSK), quadrature phase-shift keying (QPSK), M-phase-shift keying (M-PSK), M-quadrature amplitude modulation (M-QAM)). The coded and modulated symbols may then be split into parallel streams. Each stream may then be mapped to an OFDM subcarrier, multiplexed with a reference signal (e.g., pilot) in the time and/or frequency domain, and then combined together using an Inverse Fast Fourier Transform (IFFT) to produce a physical channel carrying a time domain OFDM symbol stream. The OFDM stream is spatially precoded to produce multiple spatial streams. Channel estimates from a channel estimator 374 may be used to determine the coding and modulation scheme, as well as for spatial processing. The channel estimate may be derived from a reference signal and/or channel condition feedback transmitted by the UE 350. Each spatial stream may then be provided to a different antenna 320 via a separate transmitter 318 TX. Each transmitter 318 TX may modulate an RF carrier with a respective spatial stream for transmission.

At the UE 350, each receiver 354 RX receives a signal through its respective antenna 352. Each receiver 354 RX recovers information modulated onto an RF carrier and provides the information to an RX processor 356. A TX processor 368 and the RX processor 356 implement layer 1 functionality associated with various signal processing functions. The RX processor 356 may perform spatial processing on the information to recover any spatial streams destined for the UE 350. If multiple spatial streams are destined for the UE 350, they may be combined by the RX processor 356 into a single OFDM symbol stream. The RX processor 356 then converts the OFDM symbol stream from the time-domain to the frequency domain using a Fast Fourier Transform (FFT). The frequency domain signal comprises a separate OFDM symbol stream for each subcarrier of the OFDM signal. The symbols on each subcarrier, and the reference signal, are recovered and demodulated by determining the most likely signal constellation points transmitted by the base station 310. These soft decisions may be based on channel estimates computed by a channel estimator 358. The soft decisions are then decoded and deinterleaved to recover the data and control signals that were originally transmitted by the base station 310 on the physical channel. The data and control signals are then provided to a controller/processor 359, which implements layer 3 and layer 2 functionality.

The controller/processor 359 can be associated with a memory 360 that stores program codes and data. The memory 360 may be referred to as a computer-readable medium. In the UL, the controller/processor 359 provides demultiplexing between transport and logical channels, packet reassembly, deciphering, header decompression, and control signal processing to recover IP packets from the EPC 160. The controller/processor 359 is also responsible for error detection using an ACK and/or NACK protocol to support HARQ operations.

Similar to the functionality described in connection with the DL transmission by the base station 310, the controller/processor 359 provides RRC layer functionality associated with system information (e.g., MIB, SIBs) acquisition, RRC connections, and measurement reporting; PDCP layer functionality associated with header compression / decompression, and security (ciphering, deciphering, integrity protection, integrity verification); RLC layer functionality associated with the transfer of upper layer PDUs, error correction through ARQ, concatenation, segmentation, and reassembly of RLC SDUs, re-segmentation of RLC data PDUs, and reordering of RLC data PDUs; and MAC layer functionality associated with mapping between logical channels and transport channels, multiplexing of MAC SDUs onto TBs, demultiplexing of MAC SDUs from TBs, scheduling information reporting, error correction through HARQ, priority handling, and logical channel prioritization.

Channel estimates derived by the channel estimator 358 from a reference signal or feedback transmitted by the base station 310 may be used by the TX processor 368 to select the appropriate coding and modulation schemes, and to facilitate spatial processing. The spatial streams generated by the TX processor 368 may be provided to different antenna 352 via separate transmitters 354 TX. Each transmitter 354 TX may modulate an RF carrier with a respective spatial stream for transmission.

The UL transmission is processed at the base station 310 in a manner similar to that described in connection with the receiver function at the UE 350. Each receiver 318 RX receives a signal through its respective antenna 320. Each receiver 318 RX recovers information modulated onto an RF carrier and provides the information to the RX processor 370.

The controller/processor 375 can be associated with a memory 376 that stores program codes and data. The memory 376 may be referred to as a computer-readable medium. In the UL, the controller/processor 375 provides demultiplexing between transport and logical channels, packet reassembly, deciphering, header decompression, control signal processing to recover IP packets from the UE 350. IP packets from the controller/processor 375 may be provided to the EPC 160. The controller/processor 375 is also responsible for error detection using an ACK and/or NACK protocol to support HARQ operations.

At least one of the TX processor 368, the RX processor 356, and the controller/processor 359 may be configured to perform aspects in connection with the device time synchronization handling component 198 of FIG. 1.

At least one of the TX processor 316, the RX processor 370, and the controller/processor 375 may be configured to perform aspects in connection with the network time synchronization handling component 199 of FIG. 1.

Time sensitive communication includes transmission of time-sensitive (e.g., deterministic) data over a network. For example, time sensitive communication may occur using 5G systems (5GS). In some examples, the 5G system may include TSN translators (TTs) to facilitate functions related to the PTP. For example, a RAN may provide 5GS time to UEs using signaling. A network TT (NW-TT) timestamps the PTP message with an ingress timestamp and forwards the timestamped PTP message to a UE. The UE may then forward the timestamped PTP message to a device-side TT (DS-TT), which then calculates a delta based on a difference between the ingress timestamp and the current 5GS system time. Based on the delta, the DS-TT may then modify the payload of the PTP message before forwarding the PTP message to downstream devices (e.g., one or more TSN devices) connected to the DS-TT.

It may be appreciated that such a system for creating time sensitive messages for TSN devices may consume resources at the UE and the network. For example, over-the-air resources are used for communicating the PTP message from the network to the UE. Additionally, processing resources are used at the NW-TT and the DS-TT in determining deltas for messages as they are relayed across the 5G system to the UE.

Example techniques disclosed herein enable a UE / DS-TT to operate as a PTP grand master clock. Disclosed examples enable the UE / DS-TT to indicate to the network that the UE / DS-TT is capable of operating as a PTP grand master clock and which version of PTP the UE / DS-TT supports. Disclosed techniques also enable the network to provide PTP parameters to the UE / DS-TT. Additionally, disclosed techniques enable the network to activate and/or deactivate the PTP grand master clock functionality of the UE / DS-TT.

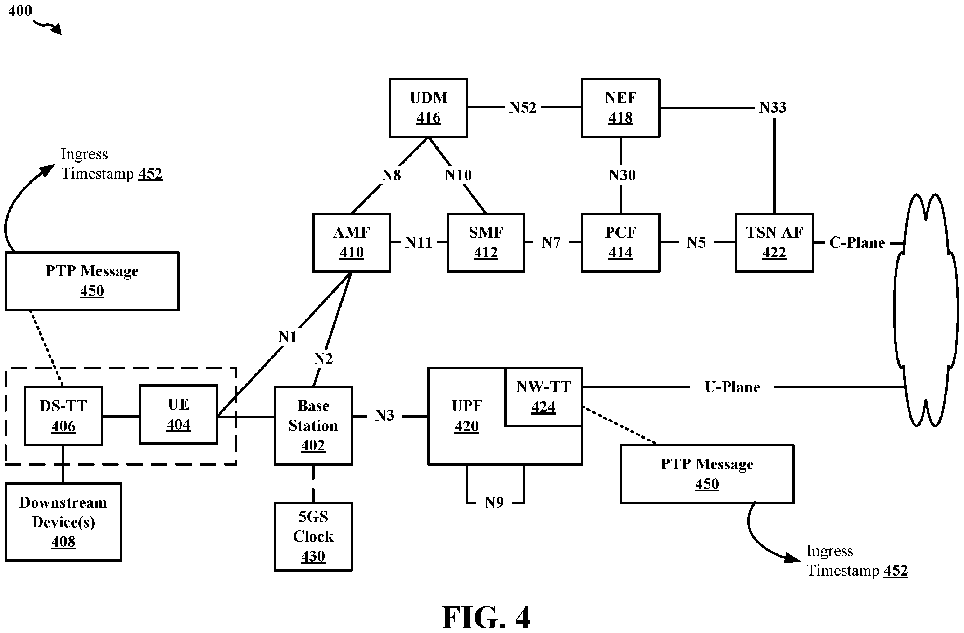

FIG. 4 is a diagram illustrating an example of a TSN system 400, as presented herein. TSN functionality allows for achieving time synchronization in real-time communications between communication equipment in a TSN environment, such as in an industrial Internet of Things (IIoT) environment. A TSN environment may benefit from high-accuracy time synchronization. The TSN system 400 may enable time sensitive communication, including transmission of time-sensitive (e.g., deterministic) data. In the illustrated example of FIG. 4, the TSN system 400 employs a wireless communication access network to operate as a bridge between aspects of the TSN system 400. For example, the TSN system 400 may utilize 5G NR to communicate TSN message between the network and downstream devices, such as IIoT devices.

The example TSN system 400 includes a base station 402 in communication with a UE 404. The UE 404 may be collocated with a device-side TSN translator (DS-TT) 406. The DS-TT 406 may be in communication with one or more downstream device(s) 408, such as medical equipment, industrial equipment, power grids, industrial Internet of Things (IIoT), etc.

In the illustrated example of FIG. 4, the base station 402 is in communication with a core network, including network entities, such as an access and mobility management function (AMF) 410, a session management function (SMF) 412, a policy control function (PCF) 414, a unified data management (UDM) 416, a network exposure function (NEF) (418), a user plane function (UPF) 420, and a TSN application function (TSN AF) 422. The network entities 410, 412, 414, 416, 418, 420, 422 may be in communication via one or more interfaces (e.g., N5, N7, N8, N9, etc.). In the illustrated example of FIG. 4, the base station 402 is in communication with a 5GS clock 430. The 5GS clock 430 provides absolute timing of radio frames to UEs in communication with the base station 402, such as the UE 404.

In some examples, to provide time synchronized data to a downstream device 408, the TSN system 400 may include a network TT (NW-TT) 424. The NW-TT 424 may provide an ingress timestamp 452 to a PTP message 450. The timestamped PTP message 450 may pass through the TSN system 400 until it transmitted from the base station 402 to the UE 404, and then provided to the DS-TT 406 by the UE 404. The DS-TT 406 may then determine a delta between the ingress timestamp 452 and the current 5GS time that corresponds to a delta associated with the delay introduced by communicating the PTP message 450 from across the network and over the air to the DS-TT 406. The DS-TT 406 may then modify the payload of the PTP message 450 by adding the delta (or delay) to the payload prior to forwarding the PTP message 450 to the downstream device 408.

However, it may be appreciated that such a system for creating time sensitive messages for TSN communications may consume resources at the UE/DS-TT and the network. For example, over-the-air resources are used for communicating the PTP message from the network to and/or from the UE/DS-TT. Additionally, processing resources are used at the NW-TT and the DS-TT in determining deltas for messages as they are relayed across the access network to the UE/DS-TT.

Example techniques disclosed herein enable a DS-TT/UE to operate as a PTP grand master clock. Disclosed examples enable the DS-TT/UE to indicate to the network that the DS-TT/UE is capable of operating as a PTP grand master clock and which version of PTP the DS-TT/UE supports. Disclosed techniques also enable the network to provide PTP parameters to the DS-TT/UE. Additionally, disclosed techniques enable the network to activate and/or deactivate the PTP grand master clock functionality of the DS-TT/UE.

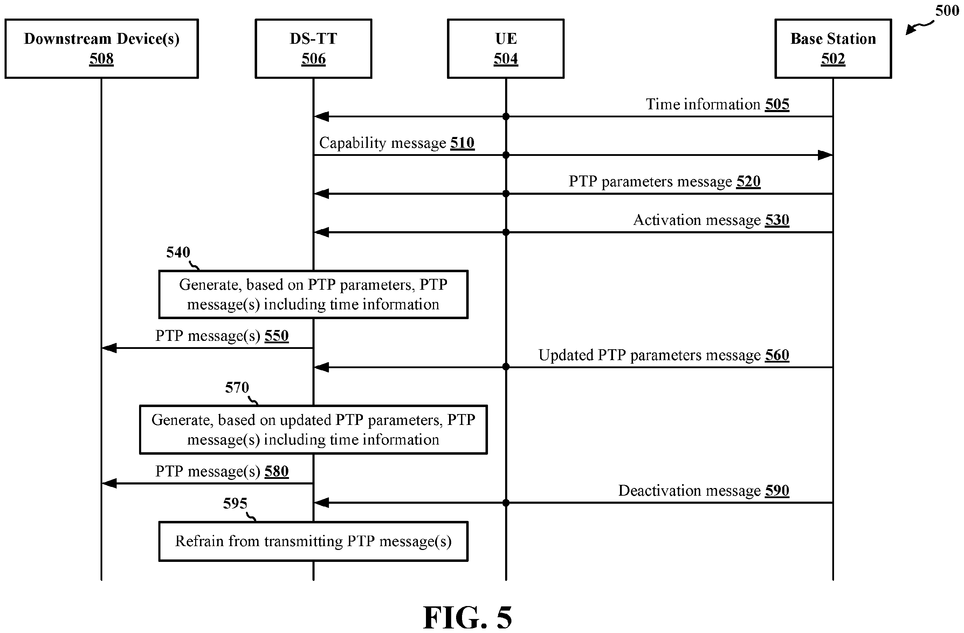

FIG. 5 illustrates an example communication flow 500 between a base station 502, a UE 504, a DS-TT 506, and one or more downstream device(s) 508, as presented herein. Aspects of the base station 502 may be implemented by the base station 102, the base station 180, the base station 310, and/or the base station 402. Aspects of the UE 504 may be implemented by the UE 104, the UE 350, and/or the UE 404. Aspects of the DS-TT 506 may be implemented by the example DS-TT 406 of FIG. 4. Aspects of the downstream device(s) 508 may be implemented by the downstream device(s) 408 of FIG. 4. In the illustrated example of FIG. 5, the DS-TT 506 is capable of operating as a PTP grand master clock. Although the example of FIG. 5 describes transmitting and receiving messages related to PTP,it may be appreciated that in other examples, the messages may be related to generalized PTP (gPTP).

In the illustrated example of FIG. 5, the UE 504 and the DS-TT 506 are collocated. The UE 504 may facilitate communication with a (R)AN, such as 5G NR, and the DS-TT 506 may facilitate communication with one or more time-sensitive networking (TSN) devices, such as the one or more downstream device(s) 508. In the illustrated example, the DS-TT 506 communicates with the (R)AN, and, in particular, with the base station 502, through the UE 504. For example, the DS-TT 506 may generate a message for the base station 502 (and/or the (R)AN) and provide the generated message to the collocated UE 504, which then relays the message to the base station 502. Similarly, the base station 502 may transmit a message that is intended for the DS-TT 506 and/or the one or more downstream device(s) 508 by transmitting the message to the UE 504, which then provides the message to the DS-TT 506. Thus, while the illustrated example depicts messages as being directly communicated between the DS-TT 506 and the base station 502, it may be appreciated that uplink messages are transmitted from the DS-TT 506 to the UE 504, which then relays the uplink message to the base station 502. Additionally, downlink messages are transmitted from the base station 502 to the UE 504, which then relays the downlink message to the DS-TT 506.

Although not shown in the illustrated example of FIG. 5, in additional or alternative examples, the base station 502 may be in communication with one or more other base stations or UEs, and/or the UE 504 may be in communication with one or more other base stations or UEs. Additionally, in some examples, messages(s) received by the base station 502 from the UE 504 (and/or the DS-TT 506) may be relayed to one or more network entities by the base station 502, such as the network entities 410, 412, 414, 416, 418, 420, 422, 424 of FIG. 4. Furthermore, in some examples, message(s) transmitted by the base station 502 to the UE 504 (and relayed to the DS-TT 506) may be messages that the base station 502 is relaying from one or more network entities, such as the network entities 410, 412, 414, 416, 418, 420, 422, 424 of FIG. 4.

In the illustrated example of FIG. 5, the base station 502 may transmit time information 505 that is received by the DS-TT 506. The time information 505 may be related to an absolute timing of radio frames based on a 5GS clock. For example, the base station 502 may receive time information from the 5GS clock 430 of FIG. 4 and transmit the received time information 505 to the DS-TT 506. In some examples, the base station 502 may transmit the time information 505 via RRC signaling. Although the illustrated example of FIG. 5 provides one example transmission of time information 505 from the base station 502 to the DS-TT 506, it may be appreciated that the base station 502 may periodically broadcast the time information 505 to the DS-TT 506, for example, via the UE 504.

In the illustrated example, the DS-TT 506 transmits a capability message 510 that is received by the base station 502. The DS-TT 506 may transmit the capability message 510 during PDU session establishment. As used herein, a PDU session is an association between a UE (e.g., the UE 504) and a data network that provides a PDU connectivity service. In some examples, a PDU session may be associated with a PDU session type, such as Internet Protocol version 4 (IPv4), IPv6, IPv4v6, Ethernet, or unstructured.

The example capability message 510 may indicate that the DS-TT 506 is capable of acting as a PTP grand master clock. In some examples, the capability message 510 may also indicate what type of PTP the DS-TT 506 supports. For example, the DS-TT 506 may support generalized PTP (gPTP)/IEEE 802.1AS, PTP over IEEE 802.3/Ethernet, PTP over user datagram protocol (UDP) over IPv4 (UDP/IPv4), or PTP over UDP over IPv6 (UDP/IPv6). It may be appreciated that generating a PTP message for the one or more downstream device(s) 508 may depend on what type of PTP the DS-TT 506 supports, thus, it may be beneficial for the DS-TT 506 to provide PTP version-type information in the capability message 510 when transmitting to the base station 502.

The capability message 510 may include one or more of supported PTP instance types (e.g., as defined in IEEE Std. 1588-2019), supported transport types (e.g., IPv4, IPv6, and/or Ethernet), supported delay mechanisms (e.g., as defined in IEEE Std. 1588-2019), PTP grandmaster capable (e.g., whether the DS-TT 506 supports acting as a PTP grandmaster), gPTP grandmaster capable (e.g., whether the DS-TT 506 supports acting as a gPTP grandmaster), supported PTP profiles (e.g., as defined in IEEE Std. 1588-2019), and/or number of supported PTP instances.

In some examples, the DS-TT 506 may transmit the capability message 510 in a port management information container (PMIC). For example, the DS-TT 506 may populate a "Time Synchronization Information" indicator in an uplink PMIC with information indicating that the DS-TT 506 supports acting as a PTP grand master clock and PTP version-type information. In some examples, the DS-TT 506 may transmit the capability message 510 in an uplink PMIC when the PDU session being established is of type Ethernet. Although not shown, it may be appreciated that the base station 502 may relay the capability message 510 (e.g., the uplink PMIC) to a TSN AF, such as the example TSN AF 422 of FIG. 4 or to an NEF, such as the example NEF 418 of FIG 4.

In some examples, the DS-TT 506 may transmit the capability message 510 in a PTP control container that is received by the base station 502. For example, the DS-TT 506 may populate a "Time Synchronization Information" indicator, as described above, in an uplink PTP control container. In some examples, the DS-TT 506 may transmit the capability message 510 in an uplink PTP control container when the PDU session being established is of type IPv4 or IPv6. Although not shown, it may be appreciated that the base station 502 may relay the capability message 510 (e.g., the uplink PTP control container) to an SMF, such as the example SMF 412 of FIG. 4, or may relay the capability message 510 (e.g., the uplink PTP control container) to an NEF, such as the example NEF 418 of FIG. 4.

In the illustrated example of FIG. 5, after receiving the capability message 510, the base station 502 transmits, based on the capability message 510, a PTP parameters message 520 that is received by the DS-TT 506. The PTP parameters message 520 may include one or more PTP parameters, such as a sending rate, time domains, port IDs, clock IDs, etc. In some examples, the PTP parameters message 520 may include PTP version-type information. It may be appreciated that in some examples, an organization may specify a specific PTP profile that includes one or more PTP parameters to include in the PTP parameters message 520. The DS-TT 506 may receive the PTP parameters message 520 during a PDU session modification procedure. The DS-TT 506 may apply the PTP parameters of the PTP parameters message 520 when generating PTP messages to send to the downstream device(s) 508.

In an example, the PTP parameters message 520 may include a PTP instance ID including a PTP profile indicator, a transport type indicator, and a grandmaster enabled indicator. The PTP profile indicator may indicate the PTP profile that the DS-TT 506 is to apply for PTP messages and as identified by the PTP profile ID. The transport type indicator may indicate the transport type that the DS-TT 506 is to use, such as IPv4, IPv6, and/or Ethernet. The grandmaster enabled indicator may indicate whether the DS-TT 506 is to operate as a grandmaster. In some examples, when the DS-TT 506 is enabled to operate as a grandmaster, the DS-TT 506 may transmit Announce messages, Sync messages, and/or Follow-up messages to the downstream device(s) 508.

In some examples, the DS-TT 506 may receive the PTP parameters message 520 in a PMIC. For example, a TSN AF (e.g., the TSN AF 422 of FIG. 4) or anNEF (e.g., the NEF 418 of FIG. 4) may transmit the PTP parameters message 520 that is relayed by the base station 502 to the DS-TT 506 in a downlink PMIC. In some examples, the DS-TT 506 may receive the PTP parameters message 520 in a downlink PMIC when the PDU session is of type Ethernet.

In some examples, the DS-TT 506 may receive the PTP parameters message 520 in a PTP control container. For example, an SMF (e.g., the SMF 412 of FIG. 4) or anNEF (e.g., the NEF 418 of FIG. 4) may transmit the PTP parameters message 520 that is relayed by the base station 502 to the DS-TT 506 in a downlink PTP control container. In some examples, the DS-TT 506 may receive the PTP parameters message 520 in a downlink PTP control container when the PDU session is of type IPv4 or IPv6.

In the illustrated example, the base station 502 transmits an activation message 530 that is received by the DS-TT 506. The activation message 530 may instruct the DS-TT 506 to initiate transmitting, based on the one or more PTP parameters, PTP messages to the downstream device(s) 508. For example, the activation message 530 may include an enable element "Grandmaster enabled" that may be set to a first value (e.g., a "1") or to a second value (e.g., a "0"). When the "Grandmaster enabled" element is set to the first value (e.g., a "1"), then the DS-TT 506 may transmit PTP messages. When the "Grandmaster enabled" element is set to the second value (e.g., a "0"), then the DS-TT 506 may stop transmitting PTP messages. Thus, the enable element "Grandmaster enabled" of the activation message 530 may be set to the first value (e.g., a "1") to initiate the DS-TT 506 to transmit PTP messages.

In some examples, the DS-TT 506 may receive the activation message 530 in a PMIC. For example, a TSN AF (e.g., the TSN AF 422 of FIG. 4) or an NEF (e.g., the NEF 418 of FIG. 4) may transmit the activation message 530 that is relayed by the base station 502 to the DS-TT 506 in a downlink PMIC. In some examples, the DS-TT 506 may receive the activation message 530 in a downlink PMIC when the PDU session is of type Ethernet.

In some examples, the DS-TT 506 may receive the activation message 530 in a PTP control container. For example, an SMF (e.g., the SMF 412 of FIG. 4) or anNEF (e.g., the NEF 418 of FIG. 4) may transmit the activation message 530 that is relayed by the base station 502 to the DS-TT 506 in a downlink PTP control container. In some examples, the DS-TT 506 may receive the activation message 530 in a downlink PTP control container when the PDU session is of type IPv4 or IPv6.

At 540, the DS-TT 506 generates, based on PTP parameters, PTP message(s) 550 including time information. For example, the DS-TT 506 may generate one or more PTP message(s) 550 after receiving the activation message 530 from the base station 502. In some examples, generating a PTP message 550 may include providing time information (e.g., the most recent time information 505) to the downstream device(s) 508. As described above, the time information may be the absolute timing of radio frames based on a 5GS clock (e.g., the 5GS clock 430 of FIG. 4). The DS-TT 506 may also generate the PTP message(s) 550 based on the one or more PTP parameters received in the PTP parameters message 520. For example, a sending rate parameter of the PTP parameters message 520 may instruct the UE 504 to generate and transmit PTP messages every 50 milliseconds (ms). Thus, it may be appreciated that the DS-TT 506 may apply the time information and the one or more PTP parameters when generating the PTP message(s) 550 (e.g., at 540) and when transmitting the generated PTP message(s) 550 to the downstream device(s) 508.

The DS-TT 506 may transmit the PTP message(s) 550 to the downstream device(s) 508 by broadcasting the PTP message(s) 550. In some examples, the DS-TT 506 may transmit the PTP message(s) 550 to the downstream device(s) 508 by multicasting the PTP message(s) 550. In some examples, the DS-TT 506 may transmit the PTP message(s) 550 to the downstream device(s) 508 by unicasting the PTP message(s) 550.

In the illustrated example of FIG. 5, the base station 502 may transmit an updated PTP parameters message 560 that is received by the DS-TT 506. The updated PTP parameters message 560 may include one or more updated PTP parameters.

In some examples, the DS-TT 506 may receive the updated PTP parameters message 560 in a PMIC. For example, a TSN AF (e.g., the TSN AF 422 of FIG. 4) or an NEF (e.g., the NEF 418 of FIG. 4) may transmit the updated PTP parameters message 560 that is relayed by the base station 502 to the DS-TT 506 in a downlink PMIC. In some examples, the DS-TT 506 may receive the updated PTP parameters message 560 in a downlink PMIC when the PDU session is of type Ethernet.

In some examples, the DS-TT 506 may receive the updated PTP parameters message 560 in a PTP control container. For example, an SMF (e.g., the SMF 412 of FIG. 4) or an NEF (e.g., the NEF 418 of FIG. 4) may transmit the updated PTP parameters message 560 that is relayed by the base station 502 to the DS-TT 506 in a downlink PTP control container. In some examples, the DS-TT 506 may receive the updated PTP parameters message 560 in a downlink PTP control container when the PDU session is of type IPv4 or IPv6.

At 570, the DS-TT 506 generates, based on updated PTP parameters, PTP message(s) including time information. For example, the DS-TT 506 may generate, based on the one or more updated PTP parameters of the updated PTP parameters message 560, one or more PTP message(s) 580 after receiving the activation message 530 from the base station 502. For example, the updated PTP parameters may update the sending rate parameter so that the DS-TT 506 generates and transmits PTP messages every 25ms (e.g., instead of every 50ms). The DS-TT 506 may then transmit the generated PTP message(s) 580 to the downstream device(s) 508 in accordance with the one or more updated PTP parameters.

The DS-TT 506 may transmit the PTP message(s) 580 to the downstream device(s) 508 by broadcasting the PTP message(s) 580. In some examples, the DS-TT 506 may transmit the PTP message(s) 580 to the downstream device(s) 508 by multicasting the PTP message(s) 580. In some examples, the DS-TT 506 may transmit the PTP message(s) 580 to the downstream device(s) 508 by unicasting the PTP message(s) 580.

In the illustrated example of FIG. 5, the base station 502 may transmit a deactivation message 590 that is received by the DS-TT 506. The deactivation message 590 may cause the DS-TT 506 to stop generating and transmitting PTP messages. In some examples, the base station 502 may transmit the deactivation message 590 in response to a configuration change, an external trigger, and/or a determination to take a downstream device 508 out of service. The deactivation message 590 may include the enable element "Grandmaster enabled" set to the second value (e.g., a "0") to cause the DS-TT 506 to stop transmitting PTP messages.

In some examples, the DS-TT 506 may receive the deactivation message 590 in a PMIC. For example, a TSN AF (e.g., the TSN AF 422 of FIG. 4) or anNEF (e.g., the NEF 418 of FIG. 4) may transmit deactivation message 590 that is relayed by the base station 502 to the DS-TT 506 in a downlink PMIC. In some examples, the DS-TT 506 may receive the deactivation message 590 in a downlink PMIC when the PDU session is of type Ethernet.

In some examples, the DS-TT 506 may receive the deactivation message 590 in a PTP control container. For example, an SMF (e.g., the SMF 412 of FIG. 4) or an NEF (e.g., the NEF 418 of FIG. 4) may transmit the deactivation message 590 that is relayed by the base station 502 to the DS-TT 506 in a downlink PTP control container. In some examples, the DS-TT 506 may receive the deactivation message 590 in a downlink PTP control container when the PDU session is of type IPv4 or IPv6.

At 595, the DS-TT 506 may refrain from transmitting PTP message(s) to the downstream device(s) 508. For example, the DS-TT 506 may stop generating and transmitting PTP message(s) after receiving the deactivation message 590. In some such examples, the DS-TT 506 may receive and forward PTP messages from the base station 502.

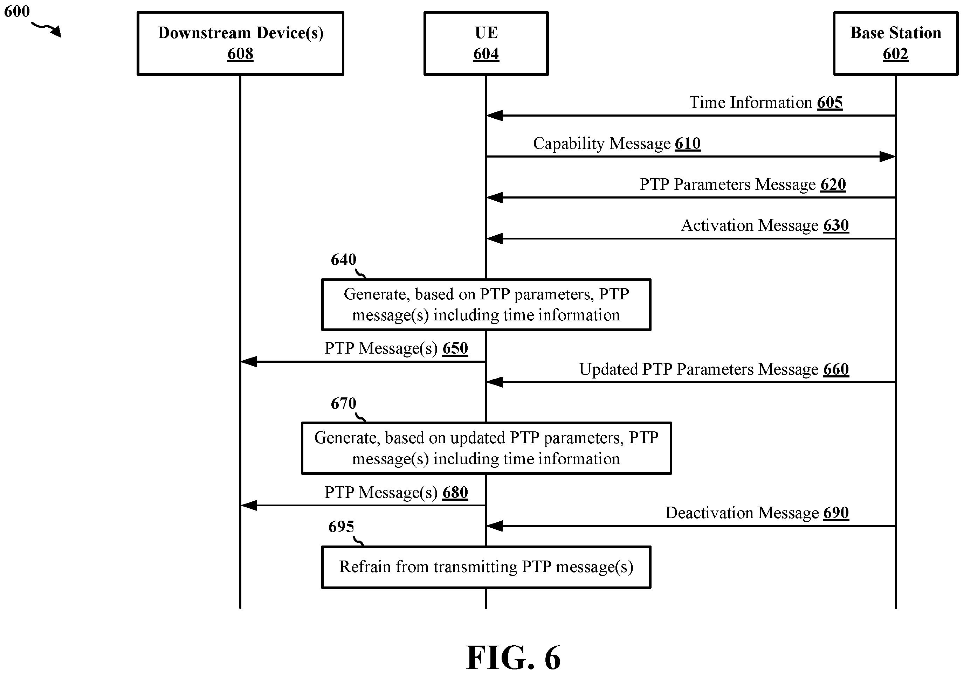

FIG. 6 illustrates an example communication flow 600 between a base station 602, a UE 604, and one or more downstream device(s) 608, in accordance with one or more techniques disclosed herein. Aspects of the base station 602 may be implemented by the base station 102, the base station 180, the base station 310, the base station 402, and/or the base station 502. Aspects of the UE 604 may be implemented by the UE 104, the UE 350, the UE 404, the UE 504, and/or the DS-TT 506. Aspects of the downstream device(s) 608 may be implemented by the downstream device(s) 408 of FIG. 4 and/or the downstream device(s) 508 of FIG. 5. In the illustrated example of FIG. 6, the UE 604 is capable of operating as a PTP grand master clock. Although the example of FIG. 6 describes transmitting and receiving messages related to PTP, it may be appreciated that in other examples, the messages may be related to gPTP.

Although not shown in the illustrated example of FIG. 6, in additional or alternative examples, the base station 602 may be in communication with one or more other base stations or UEs, and/or the UE 604 may be in communication with one or more other base stations or UEs. Additionally, in some examples, messages(s) received by the base station 602 from the UE 604 may be relayed to one or more network entities by the base station 602, such as the network entities 410, 412, 414, 416, 418, 420, 422, 424 of FIG. 4. Furthermore, in some examples, message(s) transmitted by the base station 602 to the UE 604 may be messages that the base station 602 is relaying from one or more network entities, such as the network entities 410, 412, 414, 416, 418, 420, 422, 424 of FIG. 4.

In the illustrated example of FIG. 6, the base station 602 may transmit time information 605 that is received by the UE 604. The time information 605 may be related to an absolute timing of radio frames based on a 5GS clock. For example, the base station 602 may receive time information from the 5GS clock 430 of FIG. 4 and transmit the received time information 605 to the UE 604. In some examples, the base station 602 may transmit the time information 605 via RRC signaling. Although the illustrated example of FIG. 6 provides one example transmission of time information 605 from the base station 602 to the UE 604, it may be appreciated that the base station 602 may periodically broadcast the time information 605 to the UE 604.

In the illustrated example, the UE 604 transmits a capability message 610 that is received by the base station 602. The UE 604 may transmit the capability message 610 during PDU session establishment. The example capability message 610 may indicate that the UE 604 is capable of (e.g., supports) acting as a PTP grand master clock. In some examples, the capability message 610 may also indicate what type of PTP the UE 604 supports. For example, the UE 604 may support generalized PTP (gPTP)/IEEE 802.1AS, PTP over IEEE 802.3/Ethernet, PTP over user datagram protocol (UDP) over IPv4 (UDP/IPv4), or PTP over UDP over IPv6 (UDP/IPv6). It may be appreciated that generating a PTP message for the one or more downstream device(s) 608 may depend on what type of PTP the UE 604 supports, thus, it may be beneficial for the UE 604 to provide PTP version-type information in the capability message 610 when transmitting to the base station 602.

The capability message 610 may include one or more of supported PTP instance types (e.g., as defined in IEEE Std. 1588-2019), supported transport types (e.g., IPv4, IPv6, and/or Ethernet), supported delay mechanisms (e.g., as defined in IEEE Std. 1588-2019), PTP grandmaster capable (e.g., whether the UE 604 supports acting as a PTP grandmaster), gPTP grandmaster capable (e.g., whether the UE 604 supports acting as a gPTP grandmaster), supported PTP profiles (e.g., as defined in IEEE Std. 1588-2019), number of supported PTP instances, and/or a PTP instance ID.

In some examples, the UE 604 may transmit the capability message 610 as an indicator in a protocol configuration option (PCO) to the base station 602. For example, the UE 604 may populate a "PTP support and version indication" indicator in an uplink PCO with information indicating that the UE 604 supports acting as a PTP grand master clock and PTP version-type information. Although not shown, it may be appreciated that the base station 602 may relay the capability message 610 (e.g., the uplink PCO) to an SMF, such as the example SMF 412 of FIG. 4.

In some examples, the UE 604 may transmit the capability message 610 in a non-access stratum (NAS) - session management (SM) information element that is received by the base station 602. For example, the UE 604 may populate a "PTP support and version indication" indicator, as described above, of an uplink NAS-SM information element. Although not shown, it may be appreciated that the base station 602 may relay the capability message 610 (e.g., the uplink NAS-SM information element) to an SMF, such as the example SMF 412 of FIG. 4. The NAS-SM may support handling of session management between the UE and the SMF.

In some examples, the UE 604 may transmit the capability message 610 in a PMIC. For example, the UE 604 may populate a "Time Synchronization Information" indicator in an uplink PMIC with information indicating that the UE 604 supports acting as a PTP grand master clock and PTP version-type information. In some examples, the UE 604 may transmit the capability message 610 in an uplink PMIC when the PDU session being established is of type Ethernet. Although not shown, it may be appreciated that the base station 602 may relay the capability message 610 (e.g., the uplink PMIC) to a TSN AF, such as the example TSN AF 422 of FIG. 4 or to an NEF, such as the example NEF 418 of FIG 4.

In some examples, the UE 604 may transmit the capability message 610 in a PTP control container that is received by the base station 602. For example, the UE 604 may populate a "Time Synchronization Information" indicator, as described above, in an uplink PTP control container. In some examples, the UE 604 may transmit the capability message 610 in an uplink PTP control container when the PDU session being established is of type IPv4 or IPv6. Although not shown, it may be appreciated that the base station 602 may relay the capability message 610 (e.g., the uplink PTP control container) to an SMF, such as the example SMF 412 of FIG. 4, or may relay the capability message 610 (e.g., the uplink PTP control container) to an NEF, such as the example NEF 418 of FIG. 4.

In the illustrated example of FIG. 6, after receiving the capability message 610, the base station 602 transmits, based on the received capability message 610, a PTP parameters message 620 that is received by the UE 604. The PTP parameters message 620 may include one or more PTP parameters, such as a sending rate, time domains, port IDs, clock IDs, etc. In some examples, the PTP parameters message 620 may include PTP version-type information. It may be appreciated that in some examples, an organization may specify a specific PTP profile that includes one or more PTP parameters to include in the PTP parameters message 620. The UE 604 may receive the PTP parameters message 620 during a PDU session modification procedure. The UE 604 may apply the PTP parameters of the PTP parameters message 620 when generating PTP messages to send to the downstream device(s) 608.

In an example, the PTP parameters message 620 may include a PTP instance ID including a PTP profile indicator, a transport type indicator, and a grandmaster enabled indicator. The PTP profile indicator may indicate the PTP profile that the UE 604 is to apply for PTP messages and as identified by the PTP profile ID. The transport type indicator may indicate the transport type that the UE 604 is to use, such as IPv4, IPv6, and/or Ethernet. The grandmaster enabled indicator may indicate whether the UE 604 is to operate as a grandmaster. In some examples, when the UE 604 is enabled to operate as a grandmaster, the UE 604 may transmit Announce messages, Sync messages, and/or Follow-up messages to the base station 602.

In some examples, the UE 604 may receive the PTP parameters message 620 in a PCO. For example, an SMF (e.g., the SMF 412 of FIG. 4) may transmit the PTP parameters message 620 that is relayed by the base station 602 to the UE 604 in a downlink PCO.

In some examples, the UE 604 may receive the PTP parameters message 620 in a NAS-SM information element. For example, an SMF (e.g., the SMF 412 of FIG. 4) may transmit the PTP parameters message 620 that is relayed by the base station 602 to the UE 604 in a downlink NAS-SM information element.

In some examples, the UE 604 may receive the PTP parameters message 620 in a PMIC. For example, a TSN AF (e.g., the TSN AF 422 of FIG. 4) or anNEF (e.g., the NEF 418 of FIG. 4) may transmit the PTP parameters message 620 that is relayed by the base station 602 to the UE 604 in a downlink PMIC. In some examples, the UE 604 may receive the PTP parameters message 620 in a downlink PMIC when the PDU session is of type Ethernet.

In some examples, the UE 604 may receive the PTP parameters message 620 in a PTP control container. For example, an SMF (e.g., the SMF 412 of FIG. 4) or anNEF (e.g., the NEF 418 of FIG. 4) may transmit the PTP parameters message 620 that is relayed by the base station 602 to the UE 604 in a downlink PTP control container. In some examples, the UE 604 may receive the PTP parameters message 620 in a downlink PTP control container when the PDU session is of type IPv4 or IPv6.

In the illustrated example, the base station 602 transmits an activation message 630 that is received by the UE 604. The activation message 630 may instruct the UE 604 to initiate transmitting, based on the one or more PTP parameters of the PTP parameters message 620, PTP messages to the downstream device(s) 608. For example, the activation message 630 may include an enable element "Grandmaster enabled" set to the first value (e.g., a "1") to initiate the UE 604 to transmit PTP messages.

In some examples, the UE 604 may receive the activation message 630 in a PCO. For example, an SMF (e.g., the SMF 412 of FIG. 4) may transmit the activation message 630 that is relayed by the base station 602 to the UE 604 in a downlink PCO.

In some examples, the UE 604 may receive the activation message 630 in a NAS-SM information element. For example, an SMF (e.g., the SMF 412 of FIG. 4) may transmit the activation message 630 that is relayed by the base station 602 to the UE 604 in a downlink NAS-SM information element.

In some examples, the UE 604 may receive the activation message 630 in a PMIC. For example, a TSN AF (e.g., the TSN AF 422 of FIG. 4) or an NEF (e.g., the NEF 418 of FIG. 4) may transmit the activation message 630 that is relayed by the base station 602 to the UE 604 in a downlink PMIC. In some examples, the UE 604 may receive the activation message 630 in a downlink PMIC when the PDU session is of type Ethernet.

In some examples, the UE 604 may receive the activation message 630 in a PTP control container. For example, an SMF (e.g., the SMF 412 of FIG. 4) or anNEF (e.g., the NEF 418 of FIG. 4) may transmit the activation message 630 that is relayed by the base station 602 to the UE 604 in a downlink PTP control container. In some examples, the UE 604 may receive the activation message 630 in a downlink PTP control container when the PDU session is of type IPv4 or IPv6.

At 640, the UE 604 generates, based on PTP parameters, PTP message(s) 650 including time information. For example, the UE 604 may generate one or more PTP message(s) 650 after receiving the activation message 630 from the base station 602. In some examples, generating a PTP message 650 may include providing time information (e.g., the most recent time information 605) to the downstream device(s) 608. As described above, the time information may be the absolute timing of radio frames based on a 5GS clock (e.g., the 5GS clock 430 of FIG. 4). The UE 604 may also generate the PTP message(s) 650 based on the one or more PTP parameters received in the PTP parameters message 620. For example, a sending rate parameter of the PTP parameters message 620 may instruct the UE 604 to generate and transmit PTP messages every 60 milliseconds (ms). Thus, it may be appreciated that the UE 604 may apply the time information and the one or more PTP parameters when generating the PTP message(s) 650 (e.g., at 640) and when transmitting the generated PTP message(s) 650 to the downstream device(s) 608.

The UE 604 may transmit the PTP message(s) 650 to the downstream device(s) 608 by broadcasting the PTP message(s) 650. In some examples, the UE 604 may transmit the PTP message(s) 650 to the downstream device(s) 608 by multicasting the PTP message(s) 650. In some examples, the UE 604 may transmit the PTP message(s) 650 to the downstream device(s) 608 by unicasting the PTP message(s) 650.

In the illustrated example of FIG. 6, the base station 602 may transmit an updated PTP parameters message 660 that is received by the UE 604. The updated PTP parameters message 660 may include one or more updated PTP parameters.

In some examples, the UE 604 may receive the updated PTP parameters message 660 in a PCO. For example, an SMF (e.g., the SMF 412 of FIG. 4) may transmit the updated PTP parameters message 660 that is relayed by the base station 602 to the UE 604 in a downlink PCO.

In some examples, the UE 604 may receive the updated PTP parameters message 660 in a NAS-SM information element. For example, an SMF (e.g., the SMF 412 of FIG. 4) may transmit the updated PTP parameters message 660 that is relayed by the base station 602 to the UE 604 in a downlink NAS-SM information element.

In some examples, the UE 604 may receive the updated PTP parameters message 660 in a PMIC. For example, a TSN AF (e.g., the TSN AF 422 of FIG. 4) or anNEF (e.g., the NEF 418 of FIG. 4) may transmit the updated PTP parameters message 660 that is relayed by the base station 602 to the UE 604 in a downlink PMIC. In some examples, the UE 604 may receive the updated PTP parameters message 660 in a downlink PMIC when the PDU session is of type Ethernet.

In some examples, the UE 604 may receive the updated PTP parameters message 660 in a PTP control container. For example, an SMF (e.g., the SMF 412 of FIG. 4) or an NEF (e.g., the NEF 418 of FIG. 4) may transmit the updated PTP parameters message 660 that is relayed by the base station 602 to the UE 604 in a downlink PTP control container. In some examples, the UE 604 may receive the updated PTP parameters message 660 in a downlink PTP control container when the PDU session is of type IPv4 or IPv6.

At 670, the UE 604 generates, based on updated PTP parameters, PTP message(s) including time information. For example, the UE 604 may generate, based on the one or more updated PTP parameters of the updated PTP parameters message 660, one or more PTP message(s) 680 after receiving the activation message 630 from the base station 602. For example, the updated PTP parameters may update the sending rate parameter so that the UE 604 generates and transmits PTP messages every 25ms (e.g., instead of every 50ms). The UE 604 may then transmit the generated PTP message(s) 680 to the downstream device(s) 608 in accordance with the one or more updated PTP parameters.

The UE 604 may transmit the PTP message(s) 680 to the downstream device(s) 608 by broadcasting the PTP message(s) 680. In some examples, the UE 604 may transmit the PTP message(s) 680 to the downstream device(s) 608 by multicasting the PTP message(s) 680. In some examples, the UE 604 may transmit the PTP message(s) 680 to the downstream device(s) 608 by unicasting the PTP message(s) 680.

In the illustrated example of FIG. 6, the base station 602 may transmit a deactivation message 690 that is received by the UE 604. The deactivation message 690 may cause the UE 604 to stop generating and transmitting PTP messages. In some examples, the base station 602 may transmit the deactivation message 690 in response to a configuration change, an external trigger, and/or a determination to take a downstream device 608 out of service. The deactivation message 690 may include the enable element "Grandmaster enabled" set to the second value (e.g., a "0") to cause the UE 604 to stop transmitting PTP messages.

In some examples, the UE 604 may receive the deactivation message 690 in a PCO. For example, an SMF (e.g., the SMF 412 of FIG. 4) may transmit the deactivation message 690 that is relayed by the base station 602 to the UE 604 in a downlink PCO.

In some examples, the UE 604 may receive the deactivation message 690 in a NAS-SM information element. For example, an SMF (e.g., the SMF 412 of FIG. 4) may transmit the deactivation message 690 that is relayed by the base station 602 to the UE 604 in a downlink NAS-SM information element.

In some examples, the UE 604 may receive the deactivation message 690 in a PMIC. For example, a TSN AF (e.g., the TSN AF 422 of FIG. 4) or an NEF (e.g., the NEF 418 of FIG. 4) may transmit deactivation message 690 that is relayed by the base station 602 to the UE 604 in a downlink PMIC. In some examples, the UE 604 may receive the deactivation message 690 in a downlink PMIC when the PDU session is of type Ethernet.

In some examples, the UE 604 may receive the deactivation message 690 in a PTP control container. For example, an SMF (e.g., the SMF 412 of FIG. 4) or anNEF (e.g., the NEF 418 of FIG. 4) may transmit the deactivation message 690 that is relayed by the base station 602 to the UE 604 in a downlink PTP control container. In some examples, the UE 604 may receive the deactivation message 690 in a downlink PTP control container when the PDU session is of type IPv4 or IPv6.

At 695, the UE 604 may refrain from transmitting PTP message(s) to the downstream device(s) 608. For example, the UE 604 may stop generating and transmitting PTP message(s) after receiving the deactivation message 690. In some such examples, the UE 604 may receive and forward PTP messages from the base station 602.

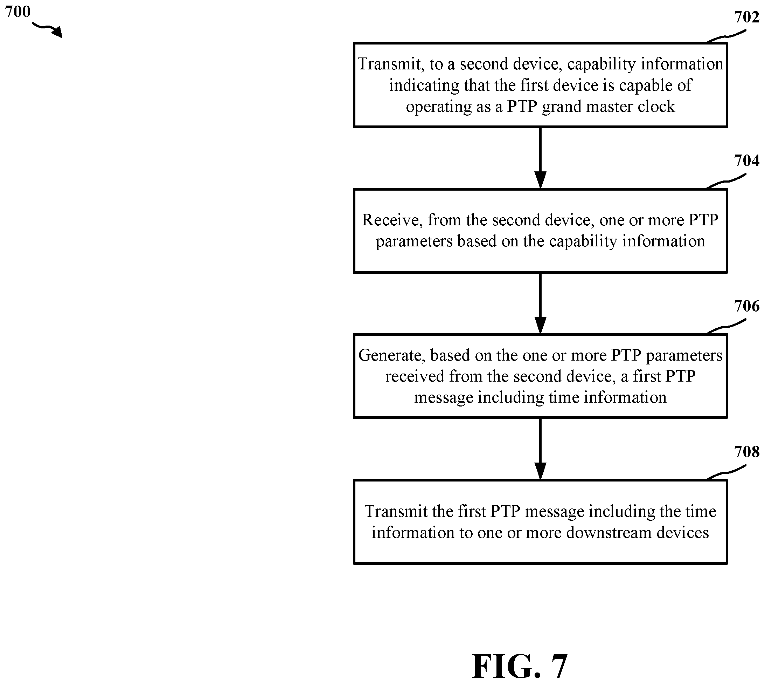

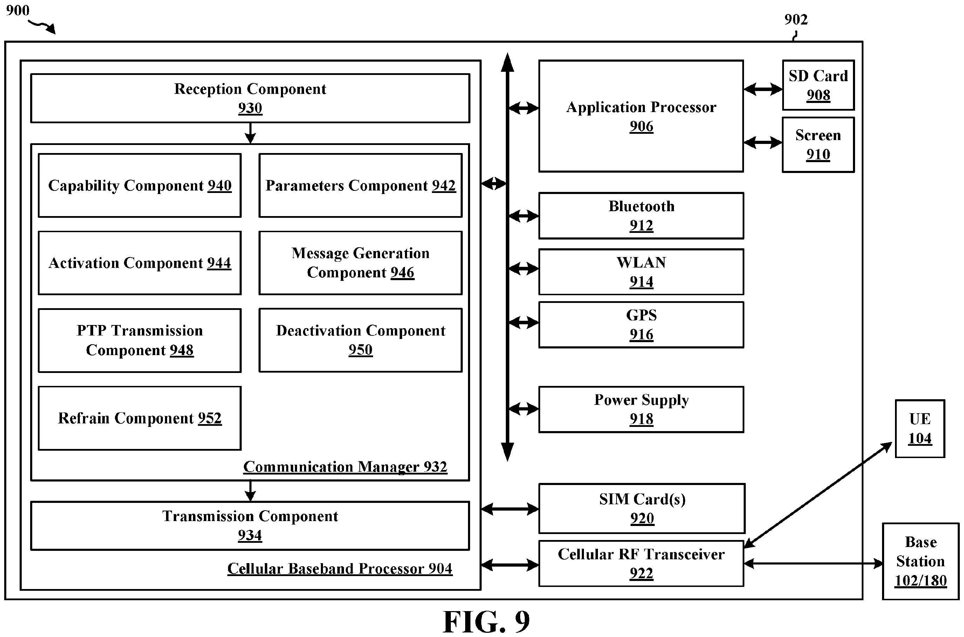

FIG. 7 is a flowchart 700 of a method of wireless communication at a first device. The method may be performed by a UE (e.g., the UE 104, the UE 350, and/or an apparatus 902 of FIG. 9) and/or a DS-TT (e.g., the DS-TT 406 and/or the DS-TT 506). The method may enable a first device (e.g., a UE or a DS-TT) to operate as a PTP grand master clock and to generate PTP messages for one or more downstream devices.

At 702, the first device transmits, to a second device, capability information indicating that the first device is capable of operating as a PTP grand master clock, as described above in connection with the capability message 510 of FIG. 5 and/or the capability message 610 of FIG. 6. For example, 702 may be performed by a capability component 940 of the apparatus 902 of FIG. 9. In some examples, the capability information may include PTP version-type information. For example, the PTP version-type information may include one of gPTP/IEEE 802.1AS, PTP over IEEE 802.3 / Ethernet, PTP over UDP over IPv4, or PTP over UDP over IPv6. In some examples, the first device may transmit the capability information during PDU session establishment.

At 704, the first device receives, from the second device, one or more PTP parameters based on the capability information, as described above in connection with the PTP parameters message 520 of FIG. 5 and/or the PTP parameters message 620 of FIG. 6. For example, 704 may be performed by a parameters component 942 of the apparatus 902 of FIG. 9. In some examples, the one or more PTP parameters may include PTP version-type information, such as gPTP/IEEE 802.1AS, PTP over IEEE 802.3 / Ethernet, PTP over UDP over IPv4, or PTP over UDP over IPv6. In some examples, the first device may receive the one or more PTP parameters during a PDU session modification procedure.

At 706, the first device generates, based on the one or more PTP parameters received from the second device, a first PTP message including time information, as described above in connection with 540 of FIG. 5 and/or 640 of FIG. 6. For example, 706 may be performed by a message generation component 946 of the apparatus 902 of FIG. 9. In some examples, the time information may be related to an absolute timing of radio frames based on a 5GS clock (e.g., the 5GS clock 430 of FIG. 4). For example, the first PTP message may include the 5GS time received in the most recent time information message 505 of FIG. 5 from the base station 502 and/or the most recent time information message 605 of FIG. 6 from the base station 602. In some examples, the first device may receive the 5GS time via RRC signaling from the second device.

At 708, the first device transmits the first PTP message including the time information to the one or more downstream devices, as described above in connection with the PTP message(s) 550 of FIG. 5 and/or the PTP message(s) 650 of FIG. 6. For example, 708 may be performed by a PTP transmission component 948 of the apparatus 902 of FIG. 9. In some examples, the transmitting of the first PTP message may include broadcasting, multicasting, or unicasting the first PTP message to the one or more downstream devices.

In some examples, the first device may be a DS-TT and the second device may be a UE, as described above in connection with FIG. 5. In some such examples, the one or more downstream devices may include a device coupled to the DS-TT via an Ethernet port.

In some examples in which the first device is a DS-TT, the UE and the base station may operate as relays for communications between the DS-TT and the TSN AF or the NEF. In the example of FIG. 7, the DS-TT may transmit (e.g., at 702) the capability information indicating that the DS-TT is capable of operating as a PTP grand master clock in an uplink port management information container, as described above in connection with the capability message 510 of FIG. 5. For example, the uplink port management information container may be relayed from the DS-TT to a TSN AF, such as the example TSN AF 422 of FIG. 4 or an NEF (e.g., the NEF 418 of FIG. 4). In some examples, the DS-TT may receive the one or more PTP parameters (e.g., at 704) in a downlink port management information container, as described above in connection with the PTP parameters message 520 of FIG. 5. For example, the downlink port management information container may be relayed from a TSN AF, such as the TSN AF 422 of FIG. 4 or an NEF (e.g., the NEF 418 of FIG. 4), to the DS-TT.

In some examples in which the first device is a DS-TT, the DS-TT may transmit (e.g., at 702) the capability information indicating that the DS-TT is capable of operating as a PTP grand master clock in an uplink PTP control container, as described above in connection with the capability message 510 of FIG. 5. For example, the uplink PTP control container may be relayed from the DS-TT to an SMF (e.g., the SMF 412 of FIG. 4) and/or an NEF (e.g., the NEF 418 of FIG. 4). In some examples, the DS-TT may receive the one or more PTP parameters (e.g., at 704) in a downlink PTP control container, as described above in connection with the PTP parameters message 520 of FIG. 5. For example, the downlink PTP control container may be relayed from an SMF (e.g., the SMF 412 of FIG. 4) and/or an NEF (e.g., the NEF 418 of FIG. 4) to the DS-TT. In some examples, at least one of the uplink PTP control container and the downlink PTP control container is transmitted in a NAS-SM information element with an SMF, such as the example SMF 412 of FIG. 4.

In some examples, the first device may be a UE and the second device may be a base station, as described above in connection with FIG. 6. In some such examples, the one or more downstream devices may include a device coupled to the UE via an Ethernet port.

In some examples in which the first device is a UE, the UE may transmit (e.g., at 702) the capability information indicating that the UE is capable of operating as a PTP grand master clock as an indication in an uplink protocol configuration option, as described above in connection with the capability message 610 of FIG. 6. For example, the uplink protocol configuration option may be relayed from the UE to an SMF, such as the example SMF 412 of FIG. 4. In some examples, the UE may receive the one or more PTP parameters (e.g., at 704) in a downlink protocol configuration option, as described above in connection with the PTP parameters message 620 of FIG. 6. For example, the downlink protocol configuration option may be relayed from an SMF, such as the SMF 412 of FIG. 4, to the UE.

In some examples in which the first device is a UE, the UE may transmit (e.g., at 702) the capability information indicating that the UE is capable of operating as a PTP grand master clock in an uplink NAS-SM information element, as described above in connection with the capability message 610 of FIG. 6. For example, the uplink NAS-SM information element may be relayed from the UE to an SMF (e.g., the SMF 412 of FIG. 4). In some examples, the UE may receive the one or more PTP parameters (e.g., at 704) in a downlink NAS-SM information element, as described above in connection with the PTP parameters message 620 of FIG. 6. For example, the downlink NAS-SM information element may be relayed from an SMF (e.g., the SMF 412 of FIG. 4) to the UE.

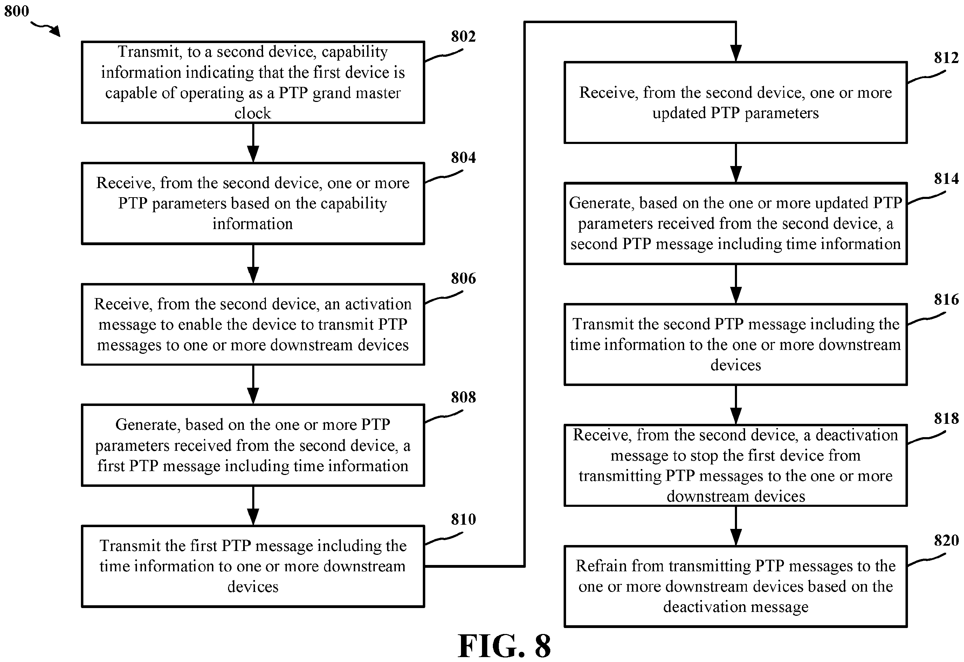

FIG. 8 is a flowchart 800 of a method of wireless communication at a first device. The method may be performed by a UE (e.g., the UE 104, the UE 350, and/or an apparatus 902 of FIG. 9) and/or a DS-TT (e.g., the DS-TT 406 and/or the DS-TT 506). The method may enable a first device (e.g., a UE or a DS-TT) to operate as a PTP grand master clock and to generate PTP messages for one or more downstream devices.

At 802, the first device transmits, to a second device, capability information indicating that the first device is capable of operating as a PTP grand master clock, as described above in connection with the capability message 510 of FIG. 5 and/or the capability message 610 of FIG. 6. For example, 802 may be performed by a capability component 940 of the apparatus 902 of FIG. 9. In some examples, the capability information may include PTP version-type information. For example, the PTP version-type information may include one of gPTP/IEEE 802.1AS, PTP over IEEE 802.3 / Ethernet, PTP over UDP over IPv4, or PTP over UDP over IPv6. In some examples, the first device may transmit the capability information during PDU session establishment.

At 804, the first device receives, from the second device, one or more PTP parameters based on the capability information, as described above in connection with the PTP parameters message 520 of FIG. 5 and/or the PTP parameters message 620 of FIG. 6. For example, 804 may be performed by a parameters component 942 of the apparatus 902 of FIG. 9. In some examples, the one or more PTP parameters may include PTP version-type information, such as gPTP/IEEE 802.1AS, PTP over IEEE 802.3 / Ethernet, PTP over UDP over IPv4, or PTP over UDP over IPv6. In some examples, the first device may receive the one or more PTP parameters during a PDU session modification procedure.

At 806, the first device may receive, from the second device, an activation message to enable the device to transmit PTP messages to one or more downstream devices, as described above in connection with the activation message 530 of FIG. 5 and/or the activation message 630 of FIG. 6. For example, 806 may be performed by an activation component 944 of the apparatus 902 of FIG. 9. In some examples, the receiving of the activation message may cause the first device to initiate transmitting PTP messages to one or more downstream devices in communication with the first device. In some examples, the first device may receive the activation message during the PDU session modification procedure.

At 808, the first device generates, based on the one or more PTP parameters received from the second device, a first PTP message including time information, as described above in connection with 540 of FIG. 5 and/or 640 of FIG. 6. For example, 808 may be performed by a message generation component 946 of the apparatus 902 of FIG. 9. In some examples, the time information may be related to an absolute timing of radio frames based on a 5GS clock (e.g., the 5GS clock 430 of FIG. 4). For example, the first PTP message may include the 5GS time received in the most recent time information message 505 of FIG. 5 from the base station 502 and/or the most recent time information message 605 of FIG. 6 from the base station 602. In some examples, the first device may receive the 5GS time via RRC signaling from the second device.

At 810, the first device transmits the first PTP message including the time information to the one or more downstream devices, as described above in connection with the PTP message(s) 550 of FIG. 5 and/or the PTP message(s) 650 of FIG. 6. For example, 810 may be performed by a PTP transmission component 948 of the apparatus 902 of FIG. 9. In some examples, the transmitting of the first PTP message may include broadcasting, multicasting, or unicasting the first PTP message to the one or more downstream devices.

At 812, the first device may receive, from the second device, one or more updated PTP parameters, as described above in connection with the updated PTP parameters message 560 of FIG. 5 and/or the updated PTP parameters messages 660 of FIG. 6. For example, 812 may be performed by the parameters component 942 of the apparatus 902 of FIG. 9. In some examples, the first device may receive the one or more updated PTP parameters during a PDU session modification procedure.

At 814, the first device may generate, based on the one or more updated PTP parameters received from the second device, a second PTP message including time information, as described above in connection with 570 of FIG. 5 and/or 670 of FIG. 6. For example, 814 may be performed by the message generation component 946 of the apparatus 902 of FIG. 9. For example, the second PTP message may include the 5GS time received in the most recent time information message 505 of FIG. 5 from the base station 502 and/or the most recent time information message 605 of FIG. 6 from the base station 602.

At 816, the first device may transmit the second PTP message including the time information to the one or more downstream devices, as described above in connection with the PTP message(s) 580 of FIG. 5 and/or the PTP message(s) 680 of FIG. 6. For example, 816 may be performed by the PTP transmission component 948 of the apparatus 902 of FIG. 9. In some examples, the transmitting of the second PTP message may include broadcasting, multicasting, or unicasting the second PTP message to the one or more downstream devices

At 818, the first device may receive, from the second device, a deactivation message to stop the first device from transmitting PTP messages to the one or more downstream devices, as described above in connection with the deactivation message 590 of FIG. 5 and/or the deactivation message 690 of FIG. 6. For example, 818 may be performed by a deactivation component 950 of the apparatus 902 of FIG. 9. In some examples, the first device may receive the deactivation message during the PDU session modification procedure.

At 820, the first device may refrain from transmitting PTP messages to the one or more downstream devices based on the deactivation message, as described above in connection with 595 of FIG. 5 and/or 695 of FIG. 6. For example, 820 may be performed by a refrain component 952 of the apparatus 902 of FIG. 9.

In some examples, the first device may be a DS-TT and the second device may be a UE, as described above in connection with FIG. 5. In some such examples, the one or more downstream devices may include a device coupled to the DS-TT via an Ethernet port.

In some examples in which the first device is a DS-TT, the DS-TT may transmit (e.g., at 802) the capability information indicating that the DS-TT is capable of operating as a PTP grand master clock in an uplink port management information container, as described above in connection with the capability message 510 of FIG. 5. For example, the uplink port management information container may be relayed from the DS-TT to a TSN AF, such as the example TSN AF 422 of FIG. 4 or anNEF (e.g., the NEF 418 of FIG. 4). In some examples, the DS-TT may receive the one or more PTP parameters (e.g., at 804), the activation message (e.g., at 806), the one or more updated PTP parameters (e.g., at 812), and/or the deactivation message (e.g., at 818) in a downlink port management information container, as described above in connection with the respective messages 520, 530, 560, 590 of FIG. 5. For example, the downlink port management information container may be relayed from a TSN AF, such as the TSN AF 422 of FIG. 4 or an NEF (e.g., the NEF 418 of FIG. 4), to the DS-TT.

In some examples in which the first device is a DS-TT, the DS-TT may transmit (e.g., at 802) the capability information indicating that the DS-TT is capable of operating as a PTP grand master clock in an uplink PTP control container, as described above in connection with the capability message 510 of FIG. 5. For example, the uplink PTP control container may be relayed from the DS-TT to an SMF (e.g., the SMF 412 of FIG. 4) and/or an NEF (e.g., the NEF 418 of FIG. 4). In some examples, the DS-TT may receive the one or more PTP parameters (e.g., at 804), the activation message (e.g., at 806), the one or more updated PTP parameters (e.g., at 812), and/or the deactivation message (e.g., at 818) in a downlink PTP control container, as described above in connection with the respective messages 520, 530, 560, 590 of FIG. 5. For example, the downlink PTP control container may be relayed from an SMF (e.g., the SMF 412 of FIG. 4) and/or an NEF (e.g., the NEF 418 of FIG. 4) to the DS-TT. In some examples, at least one of the uplink PTP control container and the downlink PTP control container is transmitted in a NAS-SM information element with an SMF, such as the example SMF 412 of FIG. 4.

In some examples, the first device may be a UE and the second device may be a base station, as described above in connection with FIG. 6. In some such examples, the one or more downstream devices may include a device coupled to the UE via an Ethernet port.

In some examples in which the first device is a UE, the UE may transmit (e.g., at 802) the capability information indicating that the UE is capable of operating as a PTP grand master clock as an indication in an uplink protocol configuration option, as described above in connection with the capability message 610 of FIG. 6. For example, the uplink protocol configuration option may be relayed from the UE to an SMF, such as the example SMF 412 of FIG. 4. In some examples, the UE may receive the one or more PTP parameters (e.g., at 804), the activation message (e.g., at 806), the one or more updated PTP parameters (e.g., at 812), and/or the deactivation message (e.g., at 818) in a downlink protocol configuration option, as described above in connection with the respective messages 620, 630, 660, 690 of FIG. 6. For example, the downlink protocol configuration option may be relayed from an SMF, such as the SMF 412 of FIG. 4, to the UE.

In some examples in which the first device is a UE, the UE may transmit (e.g., at 802) the capability information indicating that the UE is capable of operating as a PTP grand master clock in an uplink NAS-SM information element, as described above in connection with the capability message 610 of FIG. 6. For example, the uplink NAS-SM information element may be relayed from the UE to an SMF (e.g., the SMF 412 of FIG. 4). In some examples, the UE may receive the one or more PTP parameters (e.g., at 804), the activation message (e.g., at 806), the one or more updated PTP parameters (e.g., at 812), and/or the deactivation message (e.g., at 818) in a downlink NAS-SM information element, as described above in connection with the respective messages 620, 630, 660, 690 of FIG. 6. For example, the downlink NAS-SM information element may be relayed from an SMF (e.g., the SMF 412 of FIG. 4) to the UE.

FIG. 9 is a diagram 900 illustrating an example of a hardware implementation for an apparatus 902. The apparatus 902 may be a UE, a component of a UE, or may implement UE functionality. In some aspects, the apparatus902 may include a cellular baseband processor 904 (also referred to as a modem) coupled to a cellular RF transceiver 922. In some aspects, the apparatus 902 may further include one or more subscriber identity modules (SIM) cards 920, an application processor 906 coupled to a secure digital (SD) card 908 and a screen 910, a Bluetooth module 912, a wireless local area network (WLAN) module 914, a Global Positioning System (GPS) module 916, or a power supply 918. The cellular baseband processor 904 communicates through the cellular RF transceiver 922 with the UE 104 and/or base station 102/180. The cellular baseband processor 904 may include a computer-readable medium / memory. The computer-readable medium / memory may be non-transitory. The cellular baseband processor 904 is responsible for general processing, including the execution of software stored on the computer-readable medium / memory. The software, when executed by the cellular baseband processor 904, causes the cellular baseband processor 904 to perform the various functions described *supra.* The computer-readable medium / memory may also be used for storing data that is manipulated by the cellular baseband processor 904 when executing software. The cellular baseband processor 904 further includes a reception component 930, a communication manager 932, and a transmission component 934. The communication manager 932 includes the one or more illustrated components. The components within the communication manager 932 may be stored in the computer-readable medium / memory and/or configured as hardware within the cellular baseband processor 904. The cellular baseband processor 904 may be a component of the UE 350 and may include the memory 360 and/or at least one of the TX processor 368, the RX processor 356, and the controller/processor 359. In one configuration, the apparatus 902 may be a modem chip and include just the baseband processor 904, and in another configuration, the apparatus 902 may be the entire UE (e.g., see the UE 350 of FIG. 3) and include the additional modules of the apparatus 902.

The communication manager 932 includes a capability component 940 that is configured to transmit, to a first device, capability information indicating that the apparatus 902 is capable of operating as a PTP grand master clock, for example, as described in connection with 702 of FIG. 7 and/or 802 of FIG. 8.

The communication manager 932 also includes a parameters component 942 that is configured to receive, from the first device, one or more PTP parameters based on the capability information, for example, as described in connection with 704 of FIG. 7 and/or 804 of FIG. 8. The example parameters component 942 may also be configured to receive, from the first device, one or more updated PTP parameters for example, as described in connection with 812 of FIG. 8.

The communication manager 932 also includes an activation component 944 that is configured to receive, from the first device, an activation message to enable the apparatus 902 to transmit PTP messages to one or more downstream devices, for example, as described in connection with 806 of FIG. 8.

The communication manager 932 also includes a message generation component 946 that is configured to generate, based on the one or more PTP parameters received from the first device, a first PTP message including time information, for example, as described in connection with 706 of FIG. 7 and/or 808 of FIG. 8. The example message generation component 946 may also be configured to generate, based on the one or more updated PTP parameters received from the first device, a second PTP message including time information, for example, as described in connection with 814 of FIG. 8.

The communication manager 932 also includes a PTP transmission component 948 that is configured to transmit the first PTP message including the time information to the one or more downstream devices, for example, as described in connection with 708 of FIG. 7 and/or 810 of FIG. 8. The example PTP transmission component 948 may also be configured to transmit the second PTP message including the time information to the one or more downstream devices, for example, as described in connection with 816 of FIG. 8.

The communication manager 932 also includes a deactivation component 950 that is configured to receive, from the first device, a deactivation message to stop the apparatus 902 from transmitting PTP messages to the one or more downstream devices, for example, as described in connection with 818 of FIG. 8.

The communication manager 932 also includes a refrain component 952 that is configured to refrain the apparatus 902 from transmitting PTP messages to the one or more downstream devices based on the deactivation message, for example, as described in connection with 820 of FIG. 8.

The apparatus may include additional components that perform each of the blocks of the algorithm in the flowcharts of FIGs. 7 and/or 8. As such, each block in the flowcharts of FIGs. 7 and/or 8 may be performed by a component and the apparatus may include one or more of those components. The components may be one or more hardware components specifically configured to carry out the stated processes/algorithm, implemented by a processor configured to perform the stated processes/algorithm, stored within a computer-readable medium for implementation by a processor, or some combination thereof.

As shown, the apparatus 902 may include a variety of components configured for various functions. In one configuration, the apparatus 902, and in particular the cellular baseband processor 904, includes means for transmitting, to a first device, capability information indicating that the apparatus is capable of operating as a PTP grand master clock. The example apparatus 902 also includes means for receiving, from the first device, one or more PTP parameters based on the capability information indicating that the apparatus is capable of operating as a PTP grand master clock. The example apparatus 902 also includes means for generating, based on the one or more PTP parameters received from the first device, a first PTP message including time information. The example apparatus 902 also includes means for transmitting the first PTP message including the time information to one or more downstream devices in communication with the apparatus.

In another configuration, the example apparatus 902 also includes means for receiving, from the first device, an activation message to enable the apparatus to transmit PTP messages to the one or more downstream devices, and where the generating of the first PTP message is performed based on the receiving of the activation message.

In another configuration, the example apparatus 902 also includes means for receiving, from the first device, one or more updated PTP parameters. The example apparatus 902 also includes means for generating, based on the one or more updated PTP parameters received from the first device, a second PTP message including time information. The example apparatus 902 also includes means for transmitting the second PTP message including the time information to the one or more downstream devices.

In another configuration, the example apparatus 902 also includes means for receiving, from the first device, a deactivation message to stop the apparatus from transmitting PTP messages to the one or more downstream devices. The example apparatus 902 also includes means for refraining from transmitting PTP messages to the one or more downstream devices based on the deactivation message.

In another configuration, the example apparatus 902 also includes means for broadcasting the first PTP message to the one or more downstream devices.

In another configuration, the example apparatus 902 also includes means for multicasting the first PTP message to the one or more downstream devices.

In another configuration, the example apparatus 902 also includes means for unicasting the first PTP message to the one or more downstream devices.

In another configuration, the example apparatus 902 also includes means for transmitting the capability information in an uplink port management information container. The example apparatus 902 also includes means for receiving the one or more PTP parameters in a downlink port management information container.

In another configuration, the example apparatus 902 also includes means for transmitting the capability information in an uplink PTP control container. The example apparatus 902 also includes means for receiving the one or more PTP parameters in a downlink PTP control container. The example apparatus 902 also includes means for transmitting the uplink PTP control container and receiving the downlink PTP control container in a NAS-SM information element.

In another configuration, the example apparatus 902 also includes means for transmitting the capability information as an indication in an uplink protocol configuration option. The example apparatus 902 also includes means for receiving the one or more PTP parameters in a downlink protocol configuration option.

In another configuration, the example apparatus 902 also includes means for transmitting the capability information in an uplink NAS-SM information element. The example apparatus 902 also includes means for receiving the one or more PTP parameters in a downlink NAS-SM information element.

The means may be one or more of the components of the apparatus 902 configured to perform the functions recited by the means. As described *supra,* the apparatus 902 may include the TX processor 368, the RX processor 356, and the controller/processor 359. As such, in one configuration, the means may be the TX processor 368, the RX processor 356, and the controller/processor 359 configured to perform the functions recited by the means.

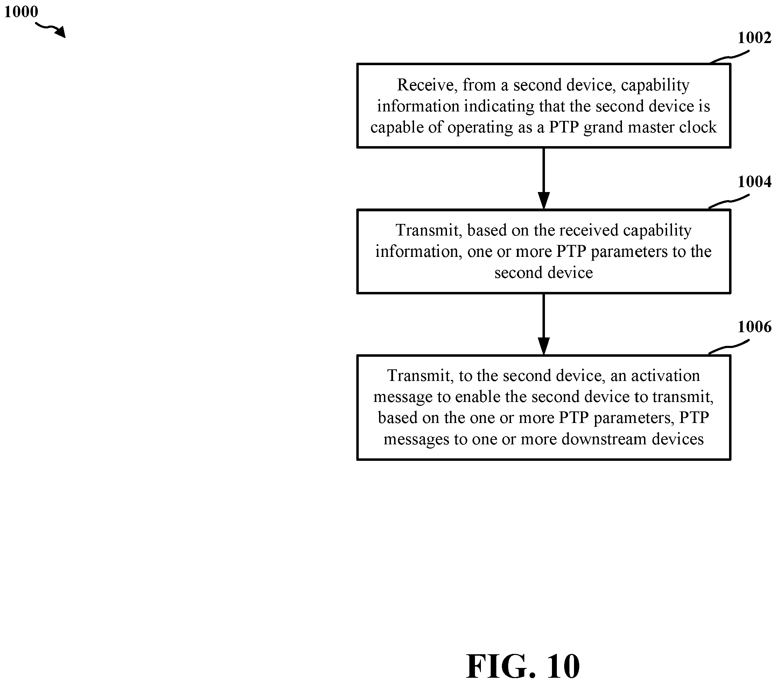

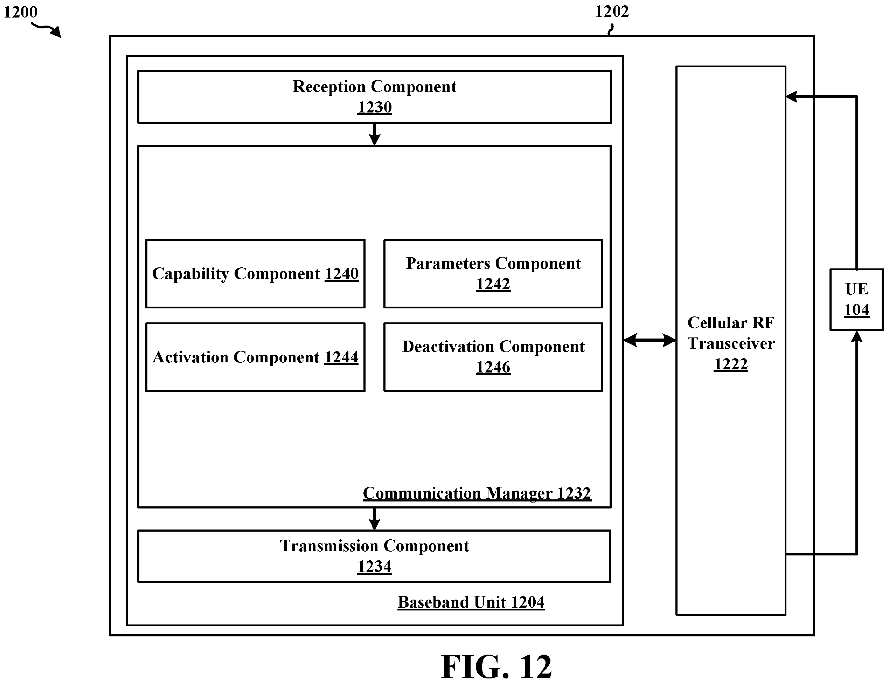

FIG. 10 is a flowchart 1000 of a method of wireless communication at a first device. The method may be performed by a base station (e.g., the base station 102/180, the base station 310, and/or an apparatus 1202 of FIG. 12) and/or a UE (e.g., the UE 104, the UE 350). The method may enable a second device (e.g., a UE or a DS-TT) to operate as a PTP grand master clock and to generate PTP messages for one or more downstream devices.

At 1002, the first device receives, from a second device, capability information indicating that the second device is capable of operating as a PTP grand master clock, as described above in connection with the capability message 510 of FIG. 5 and/or the capability message 610 of FIG. 6. For example, 1002 may be performed by a capability component 1240 of the apparatus 1202 of FIG. 12. In some examples, the capability information may include PTP version-type information. For example, the PTP version-type information may include one of gPTP/IEEE 802.1AS, PTP over IEEE 802.3/Ethernet, PTP over UDP over IPv4, or PTP over UDP over IPv6. In some examples, the first device may receive the capability information during PDU session establishment.

At 1004, the first device transmits, based on the received capability information, one or more PTP parameters to the second device, as described above in connection with the PTP parameters message 520 of FIG. 5 and/or the PTP parameters message 620 of FIG. 6. For example, 1004 may be performed by a parameters component 1242 of the apparatus 1202 of FIG. 12. In some examples, the one or more PTP parameters may include PTP version-type information, such as gPTP/IEEE 802.1AS, PTP over IEEE 802.3/Ethernet, PTP overUDP over IPv4, or PTP over UDP over IPv6. In some examples, the first device may transmit the one or more PTP parameters during aPDU session modification procedure.

At 1006, the first device may transmit, to the second device, an activation message to enable the second device to transmit, based on the one or more PTP parameters, PTP messages to one or more downstream devices, as described above in connection with the activation message 530 of FIG. 5 and/or the activation message 630 of FIG. 6. For example, 1006 may be performed by an activation component 1244 of the apparatus 1202 of FIG. 12. In some examples, the transmitting of the activation message may cause the second device to initiate transmitting PTP messages to one or more downstream devices in communication with the second device. The PTP messages may include time information and may be based on the one or more PTP parameters. In some examples, the time information may be related to an absolute timing of radio frames based on a 5GS clock. In some examples, the first device may transmit the activation message during the PDU session modification procedure.

In some examples, the first device may be a UE and the second device may be a DS-TT, as described above in connection with FIG. 5. In some such examples, the one or more downstream devices may include a device coupled to the DS-TT via an Ethernet port.

In some examples in which the first device is a UE and the second device is a DS-TT, the UE may receive (e.g., at 1002) the capability information indicating that the DS-TT is capable of operating as a PTP grand master clock in an uplink port management information container, as described above in connection with the capability message 510 of FIG. 5. For example, the uplink port management information container may be received by the UE from the DS-TT, and then relayed from the UE to a TSN AF, such as the example TSN AF 422 of FIG. 4 or an NEF (e.g., the NEF 418 of FIG. 4). In some examples, the UE may transmit the one or more PTP parameters (e.g., at 1004) in a downlink port management information container, as described above in connection with the PTP parameters message 520 of FIG. 5. For example, the downlink port management information container may be relayed from a TSN AF, such as the TSN AF 422 of FIG. 4 or an NEF (e.g., the NEF 418 of FIG. 4), to the UE, and then transmitted by the UE to the DS-TT.

In some examples in which the first device is a UE and the second device is a DS-TT, the UE may receive (e.g., at 1002) the capability information indicating that the DS-TT is capable of operating as a PTP grand master clock in an uplink PTP control container, as described above in connection with the capability message 510 of FIG. 5. For example, the uplink PTP control container may be received by the UE from the DS-TT, and then relayed from the UE to an SMF (e.g., the SMF 412 of FIG. 4) and/or an NEF (e.g., the NEF 418 of FIG. 4). In some examples, the UE may transmit the one or more PTP parameters (e.g., at 1004) in a downlink PTP control container, as described above in connection with the PTP parameters message 520 of FIG. 5. For example, the downlink PTP control container may be relayed from an SMF (e.g., the SMF 412 of FIG. 4) and/or an NEF (e.g., the NEF 418 of FIG. 4) to the UE, and then transmitted by the UE to the DS-TT. In some examples, at least one of the uplink PTP control container and the downlink PTP control container is transmitted in a NAS-SM information element with an SMF, such as the example SMF 412 of FIG. 4.

In some examples, the first device may be a base station and the second device may be a UE, as described above in connection with FIG. 6. In some such examples, the one or more downstream devices may include a device coupled to the UE via an Ethernet port.

In some examples in which the first device may be a base station and the second device may be a UE, the base station may receive (e.g., at 1002) the capability information indicating that the UE is capable of operating as a PTP grand master clock as an indication in an uplink protocol configuration option, as described above in connection with the capability message 610 of FIG. 6. For example, the uplink protocol configuration option may be received by the base station from the UE, and then relayed by the base station to an SMF, such as the example SMF 412 of FIG. 4. In some examples, the base station may transmit the one or more PTP parameters (e.g., at 1004) in a downlink protocol configuration option, as described above in connection with the PTP parameters message 620 of FIG. 6. For example, the downlink protocol configuration option may be relayed from an SMF, such as the SMF 412 of FIG. 4, to the base station, and then transmitted by the base station to the UE.

In some examples in which the first device may be a base station and the second device may be a UE, the base station may receive (e.g., at 1002) the capability information indicating that the UE is capable of operating as a PTP grand master clock in an uplink NAS-SM information element, as described above in connection with the capability message 610 of FIG. 6. For example, the uplink NAS-SM information element may be received by the base station from the UE, and then relayed from the base station to an SMF (e.g., the SMF 412 of FIG. 4). In some examples, the base station may transmit the one or more PTP parameters (e.g., at 1004) in a downlink NAS-SM information element, as described above in connection with the PTP parameters message 620 of FIG. 6. For example, the downlink NAS-SM information element may be relayed from an SMF (e.g., the SMF 412 of FIG. 4) to the base station, and then transmitted by the base station to the UE.

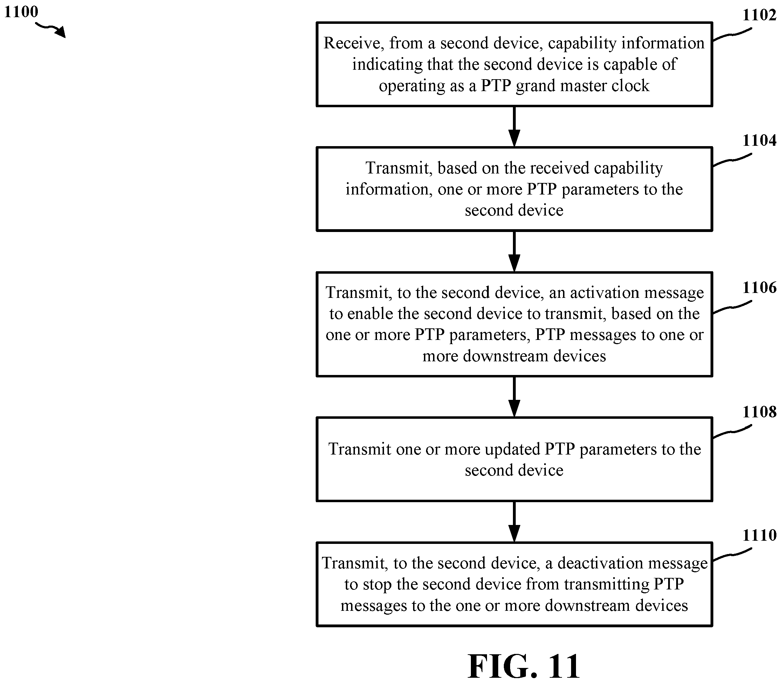

FIG. 11 is a flowchart 1100 of a method of wireless communication at a first device. The method may be performed by a base station (e.g., the base station 102/180, the base station 310, and/or an apparatus 1202 of FIG. 12) and/or a UE (e.g., the UE 104, the UE 350). The method may enable a second device (e.g., a UE or a DS-TT) to operate as a PTP grand master clock and to generate PTP messages for one or more downstream devices.

At 1102, the first device receives, from a second device, capability information indicating that the second device is capable of operating as a PTP grand master clock, as described above in connection with the capability message 510 of FIG. 5 and/or the capability message 610 of FIG. 6. For example, 1102 may be performed by a capability component 1240 of the apparatus 1202 of FIG. 12. In some examples, the capability information may include PTP version-type information. For example, the PTP version-type information may include one of gPTP/IEEE 802.1AS, PTP over IEEE 802.3/Ethernet, PTP over UDP over IPv4, or PTP over UDP over IPv6. In some examples, the first device may receive the capability information during PDU session establishment.

At 1104, the first device transmits, based on the received capability information, one or more PTP parameters to the second device, as described above in connection with the PTP parameters message 520 of FIG. 5 and/or the PTP parameters message 620 of FIG. 6. For example, 1104 may be performed by a parameters component 1242 of the apparatus 1202 of FIG. 12. In some examples, the one or more PTP parameters may include PTP version-type information, such as gPTP/IEEE 802.1AS, PTP over IEEE 802.3/Ethernet, PTP over UDP over IPv4, or PTP over UDP over IPv6. In some examples, the first device may transmit the one or more PTP parameters during aPDU session modification procedure.

At 1106, the first device may transmit, to the second device, an activation message to enable the second device to transmit, based on the one or more PTP parameters, PTP messages to one or more downstream devices, as described above in connection with the activation message 530 of FIG. 5 and/or the activation message 630 of FIG. 6. For example, 1106 may be performed by an activation component 1244 of the apparatus 1202 of FIG. 12. In some examples, the transmitting of the activation message may cause the second device to initiate transmitting PTP messages to one or more downstream devices in communication with the second device. The PTP messages may include time information and may be based on the one or more PTP parameters. In some examples, the time information may be related to an absolute timing of radio frames based on a 5GS clock. In some examples, the first device may transmit the activation message during the PDU session modification procedure.

At 1108, the first device may transmit one or more updated PTP parameters to the second device, as described above in connection with the updated PTP parameters message 560 of FIG. 5 and/or the updated PTP parameters messages 660 of FIG. 6. For example, 1108 may be performed by the parameters component 1242 of the apparatus 1202 of FIG. 12. In some examples, the first device may transmit the one or more updated PTP parameters during a PDU session modification procedure.

At 1110, the first device may transmit, to the second device, a deactivation message to stop the second device from transmitting PTP messages to the one or more downstream devices, as described above in connection with the deactivation message 590 of FIG. 5 and/or the deactivation message 690 of FIG. 6. For example, 1110 may be performed by a deactivation component 1246 of the apparatus 1202 of FIG. 12. In some examples, the first device may transmit the deactivation message during the PDU session modification procedure.

In some examples, the first device may be a UE and the second device may be a DS-TT, as described above in connection with FIG. 5. In some such examples, the one or more downstream devices may include a device coupled to the DS-TT via an Ethernet port.

In some examples in which the first device is a UE and the second device is a DS-TT, the UE may receive (e.g., at 1102) the capability information indicating that the DS-TT is capable of operating as a PTP grand master clock in an uplink port management information container, as described above in connection with the capability message 510 of FIG. 5. For example, the uplink port management information container may be received by the UE from the DS-TT, and then relayed from the UE to a TSN AF, such as the example TSN AF 422 of FIG. 4 or an NEF (e.g., the NEF 418 of FIG. 4). In some examples, the UE may transmit the one or more PTP parameters (e.g., at 1104), the activation message (e.g., at 1106), the one or more updated PTP parameters (e.g., at 1108), and/or the deactivation message (e.g., at 1110) in a downlink port management information container, as described above in connection with the respective messages 520, 530, 560, 590 of FIG. 5. For example, the downlink port management information container may be relayed from a TSN AF, such as the TSN AF 422 of FIG. 4 or an NEF (e.g., the NEF 418 of FIG. 4), to the UE, and then transmitted by the UE to the DS-TT.

In some examples in which the first device is a UE and the second device is a DS-TT, the UE may receive (e.g., at 1102) the capability information indicating that the DS-TT is capable of operating as a PTP grand master clock in an uplink PTP control container, as described above in connection with the capability message 510 of FIG. 5. For example, the uplink PTP control container may be received by the UE from the DS-TT, and then relayed from the UEto an SMF (e.g., the SMF 412 of FIG. 4) and/or an NEF (e.g., the NEF 418 of FIG. 4). In some examples, the UE may transmit the one or more PTP parameters (e.g., at 1104), the activation message (e.g., at 1106), the one or more updated PTP parameters (e.g., at 1108), and/or the deactivation message (e.g., at 1110) in a downlink PTP control container, as described above in connection with the respective messages 520, 530, 560, 590 of FIG. 5. For example, the downlink PTP control container may be relayed from an SMF (e.g., the SMF 412 of FIG. 4) and/or an NEF (e.g., the NEF 418 of FIG. 4) to the UE, and then transmitted by the UE to the DS-TT. In some examples, at least one of the uplink PTP control container and the downlink PTP control container is transmitted in a NAS-SM information element with an SMF, such as the example SMF 412 of FIG. 4.

In some examples, the first device may be a base station and the second device may be a UE, as described above in connection with FIG. 6. In some such examples, the one or more downstream devices may include a device coupled to the UE via an Ethernet port.

In some examples in which the first device may be a base station and the second device may be a UE, the base station may receive (e.g., at 1102) the capability information indicating that the UE is capable of operating as a PTP grand master clock as an indication in an uplink protocol configuration option, as described above in connection with the capability message 610 of FIG. 6. For example, the uplink protocol configuration option may be received by the base station from the UE, and then relayed by the base station to an SMF, such as the example SMF 412 of FIG. 4. In some examples, the base station may transmit the one or more PTP parameters (e.g., at 1104), the activation message (e.g., at 1106), the one or more updated PTP parameters (e.g., at 1108), and/or the deactivation message (e.g., at 1110) in a downlink protocol configuration option, as described above in connection with the respective messages 620, 630, 660, 690 of FIG. 6. For example, the downlink protocol configuration option may be relayed from an SMF, such as the SMF 412 of FIG. 4, to the base station, and then transmitted by the base station to the UE.

In some examples in which the first device may be a base station and the second device may be a UE, the base station may receive (e.g., at 1102) the capability information indication that the UE is capable of operating as a PTP grand master clock in an uplink NAS-SM information element, as described above in connection with the capability message 610 of FIG. 6. For example, the uplink NAS-SM information element may be received by the base station from the UE, and then relayed from the base station to an SMF (e.g., the SMF 412 of FIG. 4). In some examples, the base station may transmit the one or more PTP parameters (e.g., at 1104), the activation message (e.g., at 1106), the one or more updated PTP parameters (e.g., at 1108), and/or the deactivation message (e.g., at 1110) in a downlink NAS-SM information element, as described above in connection with the respective messages 620, 630, 660, 690 of FIG. 6. For example, the downlink NAS-SM information element may be relayed from an SMF (e.g., the SMF 412 of FIG. 4) to the base station, and then transmitted by the base station to the UE.

FIG. 12 is a diagram 1200 illustrating an example of a hardware implementation for an apparatus 1202. The apparatus 1202 may be a base station, a component of a base station, or may implement base station functionality. In some aspects, the apparatus 1202 may include a baseband unit 1204. The baseband unit 1204 may communicate through a cellular RF transceiver 1222 with the UE 104. The baseband unit 1204 may include a computer-readable medium / memory. The baseband unit 1204 is responsible for general processing, including the execution of software stored on the computer-readable medium / memory. The software, when executed by the baseband unit 1204, causes the baseband unit 1204 to perform the various functions described *supra.* The computer-readable medium / memory may also be used for storing data that is manipulated by the baseband unit 1204 when executing software. The baseband unit 1204 further includes a reception component 1230, a communication manager 1232, and a transmission component 1234. The communication manager 1232 includes the one or more illustrated components. The components within the communication manager 1232 may be stored in the computer-readable medium / memory and/or configured as hardware within the baseband unit 1204. The baseband unit 1204 may be a component of the base station 310 and may include the memory 376 and/or at least one of the TX processor 316, the RX processor 370, and the controller/processor 375.

The communication manager 1232 includes a capability component 1240 that is configured to receive, from a first device, capability information indicating that the first device is capable of operating as a PTP grand master clock, for example, as described in connection with 1002 of FIG. 10 and/or 1102 of FIG. 11.

The communication manager 1232 also includes a parameters component 1242 that is configured to transmit, based on the received capability information, one or more PTP parameters to the first device, for example, as described in connection with 1004 of FIG. 10 and/or 1104 of FIG. 11. The example parameters component 1242 may also be configured to transmit one or more updated PTP parameters to the first device, for example, as described in connection with 1108 of FIG. 11.

The communication manager 1232 also includes an activation component 1244 that is configured to transmit, to the first device, an activation message to enable the first device to transmit PTP messages to one or more downstream devices, for example, as described in connection with 1006 of FIG. 10 and/or 1106 of FIG. 11.

The communication manager 1232 also includes a deactivation component 1246 that is configured to transmit, to the first device, a deactivation message to stop the first device from transmitting PTP messages to the one or more downstream devices, for example, as described in connection with 1110 of FIG. 11.

The apparatus may include additional components that perform each of the blocks of the algorithm in the flowcharts of FIGs. 10 and/or 11. As such, each block in the flowcharts of FIGs. 10 and/or 11 may be performed by a component and the apparatus may include one or more of those components. The components may be one or more hardware components specifically configured to carry out the stated processes/algorithm, implemented by a processor configured to perform the stated processes/algorithm, stored within a computer-readable medium for implementation by a processor, or some combination thereof.

As shown, the apparatus 1202 may include a variety of components configured for various functions. In one configuration, the apparatus 1202, and in particular the baseband unit 1204, includes means for receiving, from a first device, capability information indicating that the first device is capable of operating as a PTP grand master clock. The example apparatus 1202 also includes means for transmitting, based on the received capability information, one or more PTP parameters to the first device. The example apparatus 1202 also includes means for transmitting, to the first device, an activation message to enable the first device to transmit, based on the one or more PTP parameters, PTP messages to one or more downstream devices in communication with the first device, the PTP messages including time information.

In another configuration, the example apparatus 1202 also includes means for transmitting one or more updated PTP parameters to the first device.

In another configuration, the example apparatus 1202 also includes means for transmitting, to the first device, a deactivation message to stop the first device from transmitting PTP messages to the one or more downstream devices.

In another configuration, the example apparatus 1202 also includes means for receiving the capability information in an uplink port management information container. The example apparatus 1202 also includes means for transmitting the one or more PTP parameters in a downlink port management information container.

In another configuration, the example apparatus 1202 also includes means for receiving the capability information in an uplink PTP control container. The example apparatus 1202 also includes means for transmitting the one or more PTP parameters in a downlink PTP control container. The example apparatus 1202 also includes means for receiving the uplink PTP control container and transmitting the downlink PTP control container in a NAS-SM information element.

In another configuration, the example apparatus 1202 also includes means for receiving the capability information as an indication in an uplink protocol configuration option. The example apparatus 1202 also includes means for indicating the one or more PTP parameters in a downlink protocol configuration option.

In another configuration, the example apparatus 1202 also includes means for receiving the capability information in an uplink NAS-SM information element. The example apparatus 1202 also includes means for transmitting the one or more PTP parameters in a downlink NAS-SM information element.

The means may be one or more of the components of the apparatus 1202 configured to perform the functions recited by the means. As described *supra*, the apparatus 1202 may include the TX processor 316, the RX processor 370, and the controller/processor 375. As such, in one configuration, the means may be the TX processor 316, the RX processor 370, and the controller/processor 375 configured to perform the functions recited by the means.

Example techniques disclosed herein enable a UE/ DS-TT to operate as a PTP grand master clock. Disclosed examples enable the UE / DS-TT to indicate to the network that the UE / DS-TT is capable of operating as a PTP grand master clock and which version of PTP the UE / DS-TT supports. Disclosed techniques also enable the network to provide PTP parameters to the UE / DS-TT. Additionally, disclosed techniques enable the network to activate and/or deactivate the PTP grand master clock functionality of the UE / DS-TT.

It is understood that the specific order or hierarchy of blocks in the processes / flowcharts disclosed is an illustration of example approaches. Based upon design preferences, it is understood that the specific order or hierarchy of blocks in the processes / flowcharts may be rearranged. Further, some blocks may be combined or omitted. The accompanying method claims present elements of the various blocks in a sample order, and are not meant to be limited to the specific order or hierarchy presented.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but is to be accorded the full scope consistent with the language claims, wherein reference to an element in the singular is not intended to mean "one and only one" unless specifically so stated, but rather "one or more." Terms such as "if," "when," and "while" should be interpreted to mean "under the condition that" rather than imply an immediate temporal relationship or reaction. That is, these phrases, e.g., "when," do not imply an immediate action in response to or during the occurrence of an action, but simply imply that if a condition is met then an action will occur, but without requiring a specific or immediate time constraint for the action to occur. The word "exemplary" is used herein to mean "serving as an example, instance, or illustration." Any aspect described herein as "exemplary" is not necessarily to be construed as preferred or advantageous over other aspects. Unless specifically stated otherwise, the term "some" refers to one or more. Combinations such as "at least one of A, B, or C," "one or more of A, B, or C," "at least one of A, B, and C," "one or more of A, B, and C," and "A, B, C, or any combination thereof" include any combination of A, B, and/or C, and may include multiples of A, multiples of B, or multiples of C. Specifically, combinations such as "at least one of A, B, or C," "one or more of A, B, or C," "at least one of A, B, and C," "one or more of A, B, and C," and "A, B, C, or any combination thereof" may be A only, B only, C only, A and B, A and C, B and C, or A and B and C, where any such combinations may contain one or more member or members of A, B, or C. All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims. The words "module," "mechanism," "element," "device," and the like may not be a substitute for the word "means." As such, no claim element is to be construed as a means plus function unless the element is expressly recited using the phrase "means for."

## Claims

1. An apparatus for wireless communication, comprising:
a memory; and
at least one processor (904) coupled to the memory and configured to:
transmit (702; 802), to a first device (502; 602), capability information (510; 610) indicating that the apparatus is capable of operating as a precision time protocol, PTP, grand master clock;
receive (704; 804), from the first device (502; 602), one or more PTP parameters (520; 620) based on the capability information (510; 610) indicating that the apparatus is capable of operating as a PTP grand master clock;
generate (540; 640; 706; 808), based on the one or more PTP parameters (520; 620) received from the first device (502; 602), a first PTP message (550; 650) including time information; and
transmit (708; 810) the first PTP message (550; 650) including the time information to one or more downstream devices (508; 608) in communication with the apparatus.

2. The apparatus of claim 1, wherein the memory and the at least one processor are further configured to:
receive, from the first device, an activation message to enable the apparatus to transmit PTP messages to the one or more downstream devices,
wherein the generating of the first PTP message is performed based on the receiving of the activation message; or
receive, from the first device, one or more updated PTP parameters; generate, based on the one or more updated PTP parameters received from the first device, a second PTP message including time information; and transmit the second PTP message including the time information to the one or more downstream devices; or
receive, from the first device, a deactivation message to stop the apparatus from transmitting PTP messages to the one or more downstream devices; and
refrain from transmitting PTP messages to the one or more downstream devices based on the deactivation message.

3. The apparatus of claim 1, wherein to transmit the first PTP message, the memory and the at least one processor are configured to: broadcast the first PTP message to the one or more downstream devices; multicast the first PTP message to the one or more downstream devices; or unicast the first PTP message to the one or more downstream devices.

4. The apparatus of claim 1, wherein the apparatus comprises a device-side, DS, time sensitive networking, TSN, translator, DS-TT, and the first device comprises a user equipment, UE.

5. The apparatus of claim 4, wherein the one or more downstream devices includes a device coupled to the apparatus via an Ethernet port.

6. The apparatus of claim 4, wherein the memory and the at least one processor are configured to;
transmit the capability information in an uplink port management information container and receive the one or more PTP parameters in a downlink port management information container; or
transmit the capability information in an uplink PTP control container and receive the one or more PTP parameters in a downlink PTP control container.

7. The apparatus of claim 6, wherein the memory and the at least one processor are configured to:
transmit the capability information in an uplink PTP control container and receive the one or more PTP parameters in a downlink PTP control container; and
at least one of transmit the uplink PTP control container and receive the downlink PTP control container in a non-access stratum, NAS - session management, SM, information element.

8. The apparatus of claim 1, wherein the apparatus comprises a user equipment, UE, and the first device comprises a base station.

9. The apparatus of claim 8, wherein the memory and the at least one processor are configured to:
transmit the capability information as an indication in an uplink protocol configuration option and receive the one or more PTP parameters in a downlink protocol configuration option; or
transmit the capability information in an uplink non-access stratum, NAS - session management, SM, information element and receive the one or more PTP parameters in a downlink NAS-SM information element.

10. A method of wireless communication at a first device (506; 604), comprising:
transmitting (702; 802), to a second device (502; 602), capability information (510; 610) indicating that the first device is capable of operating as a precision time protocol, PTP, grand master clock;
receiving (704; 804), from the second device (502; 602), one or more PTP parameters (520; 620) based on the capability information indicating that the first device is capable of operating as a PTP grand master clock;
generating (540; 640; 706; 808), based on the one or more PTP parameters (520; 620) received from the second device (502; 602), a first PTP message (550; 650) including time information; and
transmitting (708; 810) the first PTP message (550; 650) including the time information to one or more downstream devices (508; 608) in communication with the first device.

11. An apparatus for wireless communication, comprising:
a memory; and
at least one processor (1204) coupled to the memory and configured to:
receive (1002; 1102), from a first device (506; 604), capability information (510; 610) indicating that the first device is capable of operating as a precision time protocol, PTP, grand master clock;
transmit (1004; 1104), based on the received capability information (510; 610), one or more PTP parameters (520; 620) to the first device (506; 604); and
transmit (1006; 1106), to the first device (506; 604), an activation message (530; 630) to enable the first device (506; 604) to transmit, based on the one or more PTP parameters (520; 620), PTP messages (550; 650) to one or more downstream devices (508; 608) in communication with the first device (506; 604), the PTP messages (550; 650) including time information.

12. The apparatus of claim 1 or 11, wherein:
the time information is related to an absolute timing of radio frames based on a 5G system, 5GS, clock; or
the one or more PTP parameters includes PTP version-type information; or
the capability information includes PTP version-type information.

13. The apparatus of claim 12, wherein, when the capability information includes PTP version-type information, the PTP version-type information includes one of generalized PTP/IEEE 802.1AS, PTP over IEEE 802.3/Ethernet, PTP over user datagram protocol, UDP, over Internet protocol version 4- IPv4, and PTP over UDP over IPv6.

14. The apparatus of claim 11, wherein the apparatus comprises:
a user equipment, UE, and the first device comprises a device-side, DS, time sensitive networking, TSN, translator, DS-TT; or
a base station, and the first device comprises a UE.

15. The apparatus of claim 1 or 11, further comprising a transceiver coupled to the at least one processor.

16. A method of wireless communication at a first device (502; 602), comprising:
receiving (1002; 1102), from a second device (506; 604), capability information (510; 610) indicating that the second device (506; 604) is capable of operating as a precision time protocol, PTP, grand master clock;
transmitting (1004; 1104), based on the received capability information (510; 610), one or more PTP parameters (520; 620) to the second device (506; 604); and
transmitting (1004; 1104), to the second device (506; 604), an activation message (530; 630) to enable the second device (506; 604) to transmit, based on the one or more PTP parameters (520; 620), PTP messages (550; 650) to one or more downstream devices (508; 608) in communication with the second device (506; 604), the PTP messages (550; 650) including time information.

## Patentansprüche

1. Eine Vorrichtung für eine drahtlose Kommunikation, aufweisend:
einen Speicher, und
wenigstens einen Prozessor (904), der mit dem Speicher gekoppelt ist und konfiguriert ist zum:
Senden (702; 802), an ein erstes Gerät (502; 602), von Fähigkeitsinformationen (510; 610), die angeben, dass die Vorrichtung befähigt ist für einen Betrieb als eine PTP (Precision Time Protocol)-Grandmaster-Clock,
Empfangen (704; 804), von dem ersten Gerät (502; 602), eines oder mehrerer PTP-Parameter (520; 620) basierend auf den Fähigkeitsinformationen (510; 610), die angeben, dass die Vorrichtung befähigt ist für einen Betrieb als eine PTP-Grandmaster-Clock,
Generieren (540; 640; 706; 808), basierend auf dem einen oder den mehreren PTP-Parametern (520; 620), die von dem ersten Gerät (502; 602) empfangen werden, einer ersten PTP-Nachricht (550; 650) einschließlich von Zeitinformationen, und
Senden (708; 810) der ersten PTP-Nachricht (550; 650) einschließlich der Zeitinformationen an ein oder mehrere Downstream-Geräte (508; 608), die mit der Vorrichtung kommunizieren.

2. Vorrichtung nach Anspruch 1, wobei der Speicher und der wenigstens eine Prozessor weiterhin konfiguriert sind zum:
Empfangen, von dem ersten Gerät, einer Aktivierungsnachricht für das Aktivieren der Vorrichtung für das Senden von PTP-Nachrichten an das eine oder die mehreren Downstream-Geräte,
wobei das Generieren der ersten PTP-Nachricht basierend auf dem Empfangen der Aktivierungsnachricht durchgeführt wird, oder
Empfangen, von dem ersten Gerät, eines oder mehrerer aktualisierter PTP-Parameter, Generieren, basierend auf dem einen oder den mehreren aktualisierten PTP-Parametern, die von dem ersten Gerät empfangen werden, einer zweiten PTP-Nachricht einschließlich von Zeitinformationen, und Senden der zweiten PTP-Nachricht einschließlich der Zeitinformationen an das eine oder die mehreren Downstream-Geräte, oder
Empfangen, von dem ersten Gerät, einer Deaktivierungsnachricht für das Stoppen des Sendens von PTP-Nachrichten von der Vorrichtung an das eine oder die mehreren Downstream-Geräte, und
Unterbinden des Sendens von PTP-Nachrichten an das eine oder die mehreren Downstream-Geräte basierend auf der Deaktivierungsnachricht.

3. Vorrichtung nach Anspruch 1, wobei für das Senden der ersten PTP-Nachricht der Speicher und der wenigstens eine Prozessor konfiguriert sind zum: Broadcasten der ersten PTP-Nachricht an das eine oder die mehreren Downstream-Geräte; Multicasten der ersten PTP-Nachricht an das eine oder die mehreren Downstream-Geräte; oder Unicasten der ersten PTP-Nachricht an das eine oder die mehreren Downstream-Geräte.

4. Vorrichtung nach Anspruch 1, wobei die Vorrichtung ein geräteseitiger (Device-Side bzw. DS) Time-Sensitive-Networking (TSN)-Translator (DS-TT) ist und das erste Gerät ein Benutzergerät (User Equipment bzw. UE) ist.

5. Vorrichtung nach Anspruch 4, wobei das eine oder die mehreren Downstream-Geräte ein über einen Ethernetport mit der Vorrichtung gekoppeltes Gerät umfassen.

6. Vorrichtung nach Anspruch 4, wobei der Speicher und der wenigstens eine Prozessor konfiguriert sind zum:
Senden der Fähigkeitsinformationen in einem Aufwärtsstrecke-Portverwaltung-Informationscontainer und Empfangen des einen oder der mehreren PTP-Parameter in einem Abwärtsstrecke-Portverwaltung-Informationscontainer, oder
Senden der Fähigkeitsinformationen in einem Aufwärtsstrecke-PTP-Steuercontainer und Empfangen des einen oder der mehreren PTP-Parameter in einem Abwärtsstrecke-PTP-Steuercontainer.

7. Vorrichtung nach Anspruch 6, wobei der Speicher und der wenigstens eine Prozessor konfiguriert sind zum:
Senden der Fähigkeitsinformationen in einem Aufwärtsstrecke-PTP-Steuercontainer und Empfangen des einen oder der mehreren PTP-Parameter in einem Abwärtsstrecke-PTP-Steuercontainer, und
Senden des Aufwärtsstrecke-PTP-Steuercontainers und/oder Empfangen des Abwärtsstrecke-PTP-Steuercontainers in einem NAS (Non-Access Stratum)-Sitzungsverwaltung (Session Management bzw. SM)-Informationselement.

8. Vorrichtung nach Anspruch 1, wobei die Vorrichtung ein Benutzergerät (User Equipment bzw. UE) ist und das erste Gerät eine Basisstation ist.

9. Vorrichtung nach Anspruch 8, wobei der Speicher und der wenigstens eine Prozessor konfiguriert sind zum:
Senden der Fähigkeitsinformationen als einer Angabe in einer Aufwärtsstrecke-Protokollkonfigurationsoption und Empfangen des einen oder der mehreren PTP-Parameter in einer Abwärtsstrecke-Protokollkonfigurationsoption, oder
Senden der Fähigkeitsinformationen in einem Aufwärtsstrecke-NAS (Non-Access Stratum)-Sitzungsverwaltung (Session Management bzw. SM)-Informationselement und Empfangen des einen oder der mehreren PTP-Parameter in einem Abwärtsstrecke-NAS-SM-Informationselement.

10. Ein Verfahren für eine drahtlose Kommunikation an einem ersten Gerät (506; 604), aufweisend:
Senden (702; 802), an ein zweites Gerät (502; 602), von Fähigkeitsinformationen (510; 610), die angeben, dass das erste Gerät befähigt ist für einen Betrieb als eine PTP (Precision Time Protocol)-Grandmaster-Clock,
Empfangen (704; 804), von dem zweiten Gerät (502; 602), eines oder mehrerer PTP-Parameter (520, 620), basierend auf den Fähigkeitsinformationen, die angeben, dass das erste Gerät befähigt ist für einen Betrieb als eine PTP-Grandmaster-Clock,
Generieren (540; 640; 706; 808), basierend auf dem einen oder den mehreren PTP-Parametern (520; 620), die von dem zweiten Gerät (502; 602) empfangen werden, einer ersten PTP-Nachricht (550; 650) einschließlich von Zeitinformationen, und
Senden (708; 810), der ersten PTP-Nachricht (550; 650) einschließlich der Zeitinformationen an ein oder mehrere Downstream-Geräte (508; 608), die mit dem ersten Gerät kommunizieren.

11. Eine Vorrichtung für eine drahtlose Kommunikation, aufweisend:
einen Speicher, und
wenigstens einen Prozessor (1204), der mit dem Speicher gekoppelt ist und konfiguriert ist zum:
Empfangen (1002; 1102), von einem ersten Gerät (506; 604), von Fähigkeitsinformationen (510; 610), die angeben, dass das erste Gerät befähigt ist für einen Betrieb als eine PTP (Precision Time Protocol)-Grandmaster-Clock,
Senden (1004; 1104), basierend auf den empfangenen Fähigkeitsinformationen (510; 610), eines oder mehrerer PTP-Parameter (520; 620) an das erste Gerät (506; 604), und
Senden (1006; 1106), an das erste Gerät (506; 604), einer Aktivierungsnachricht (530; 630) für das Aktivieren des ersten Geräts (506; 604) für das Senden, basierend auf dem einen oder den mehreren PTP-Parametern (520; 620), von PTP-Nachrichten (550; 650) an ein oder mehrere Downstream-Geräte (508; 608), die mit dem ersten Gerät (506; 604) kommunizieren, wobei die PTP-Nachrichten (550; 650) Zeitinformationen enthalten.

12. Vorrichtung nach Anspruch 1 oder 11, wobei:
die Zeitinformationen auf ein absolutes Timing von Funkrahmen basierend auf einem 5G-System (5GS)-Takt bezogen sind, oder
der eine oder die mehreren PTP-Parameter PTP-Versionstypinformationen enthalten, oder
die Fähigkeitsinformationen PTP-Versionstypinformationen enthalten.

13. Vorrichtung nach Anspruch 12, wobei, wenn die Fähigkeitsinformationen PTP-Versionstypinformationen enthalten, die PTP-Versionstypinformationen allgemein PTP/IEEE 802.1AS, PTP über IEEE 802.3/Ethernet, PTP über UDP (User Datagram Protocol) über Internet Protocol Version 4 (IPv4) oder PTP über UDP über IPv6 sind.

14. Vorrichtung nach Anspruch 11, wobei:
die Vorrichtung ein Benutzergerät (User Equipment bzw. UE) ist und das erste Gerät ein geräteseitiger (Device-Side bzw. DS) Time-Sensitive-Networking (TSN)-Translator (DS-TT) ist, oder
die Vorrichtung eine Basisstation ist und das erste Gerät ein UE ist.

15. Vorrichtung nach Anspruch 1 oder 11, die weiterhin einen mit dem wenigstens einen Prozessor gekoppelten Sendeempfänger umfasst.

16. Ein Verfahren für eine drahtlose Kommunikation an einem ersten Gerät (502; 602), aufweisend:
Empfangen (1002; 1102), von einem zweiten Gerät (506; 604), von Fähigkeitsinformationen (510; 610), die angeben, dass das zweite Gerät (506; 604) befähigt ist für einen Betrieb als eine PTP (Precision Time Protocol)-Grandmaster-Clock,
Senden (1004; 1104), basierend auf den empfangenen Fähigkeitsinformationen (510; 610), eines oder mehrerer PTP-Parameter (520; 620) an das zweite Gerät (506; 604), und
Senden (1004; 1104), an das zweite Gerät (506; 604), einer Aktivierungsnachricht (530; 630) für das Aktivieren des zweiten Geräts (506; 604) für das Senden, basierend auf dem einen oder den mehreren PTP-Parametern (520; 620), von PTP-Nachrichten (550; 650) an ein oder mehrere Downstream-Geräte (508; 608), die mit dem zweiten Gerät (506; 604) kommunizieren, der PTP-Nachrichten (550; 650) einschließlich von Zeitinformationen.

## Revendications

1. Un appareil de communication sans fil, comprenant :
une mémoire, et
au moins un processeur (904) couplé à la mémoire et configuré de façon à :
transmettre (702; 802), à un premier dispositif (502; 602), des informations de capacité (510; 610) indiquant que l'appareil est capable de fonctionner en tant que grande horloge maître de protocole temporel de précision, PTP,
recevoir (704; 804), à partir du premier dispositif (502; 602), un ou plusieurs paramètres PTP (520; 620) en fonction de l'indication données par les informations de capacité (510; 610) indiquant que l'appareil est capable de fonctionner en tant que grande horloge maître PTP,
générer (540; 640; 706; 808), en fonction des un ou plusieurs paramètres PTP (520; 620) reçus à partir du premier dispositif (502; 602), un premier message PTP (550; 650) contenant des informations temporelles, et
transmettre (708; 810) le premier message PTP (550; 650) contenant les informations temporelles à un ou plusieurs dispositifs en aval (508; 608) en communication avec l'appareil.

2. L'appareil selon la Revendication 1, où la mémoire et le au moins un processeur sont configurés en outre de façon à :
recevoir, à partir du premier dispositif, un message d'activation destiné à permettre à l'appareil de transmettre des messages PTP aux un ou plusieurs dispositifs en aval,
où la génération du premier message PTP est exécutée en fonction de la réception du message d'activation, ou
recevoir, à partir du premier dispositif, un ou plusieurs paramètres PTP actualisés, générer, en fonction des un ou plusieurs paramètres PTP actualisés reçus du premier dispositif, un deuxième message PTP contenant des informations temporelles, et transmettre le deuxième message PTP contenant les informations temporelles aux un ou plusieurs dispositifs en aval, ou
recevoir, à partir du premier dispositif, un message de désactivation destiné à arrêter la transmission par l'appareil des messages PTP aux un ou plusieurs dispositifs en aval, et
s'abstenir de transmettre des messages PTP aux un ou plusieurs dispositifs en aval en fonction du message de désactivation.

3. L'appareil selon la Revendication 1, où pour transmettre le premier message PTP, la mémoire et le au moins un processeur sont configurés de façon à : radiodiffuser le premier message PTP aux un ou plusieurs dispositifs en aval, multidiffuser le premier message PTP aux un ou plusieurs dispositifs en aval ou monodiffuser le premier message PTP aux un ou plusieurs dispositifs en aval.

4. L'appareil selon la Revendication 1, où l'appareil comprend un convertisseur de mise en réseau sensible au temps, TSN, côté dispositif, DS, DS-TT et le premier dispositif comprend un équipement d'utilisateur, UE.

5. L'appareil selon la Revendication 4, où les un ou plusieurs dispositifs en aval comprennent un dispositif couplé à l'appareil par l'intermédiaire d'un port Ethernet.

6. L'appareil selon la Revendication 4, où la mémoire et le au moins un processeur sont configurés de façon à :
transmettre les informations de capacité dans un conteneur d'informations de gestion de ports en liaison montante et recevoir les un ou plusieurs paramètres PTP dans un conteneur d'informations de gestion de ports en liaison descendante, ou
transmettre les informations de capacité dans un conteneur de commande PTP en liaison montante et recevoir les un ou plusieurs paramètres PTP dans un conteneur de commande PTP en liaison descendante.

7. L'appareil selon la Revendication 6, où la mémoire et le au moins un processeur sont configurés de façon à :
transmettre les informations de capacité dans un conteneur de commande PTP en liaison montante et recevoir les un ou plusieurs paramètres PTP dans un conteneur de commande PTP en liaison descendante, et
exécuter au moins une opération parmi transmettre le conteneur de commande PTP en liaison montante et recevoir le conteneur de commande PTP en liaison descendante dans un élément d'informations de gestion de session, SM, de strate de non-accès, NAS.

8. L'appareil selon la Revendication 1, où l'appareil comprend un équipement d'utilisateur, UE, et le premier dispositif comprend une station de base.

9. L'appareil selon la Revendication 8, où la mémoire et le au moins un processeur sont configurés de façon à :
transmettre les informations de capacité sous la forme d'une indication dans une option de configuration de protocole en liaison montante et recevoir les un ou plusieurs paramètres PTP dans une option de configuration de protocole en liaison descendante, ou
transmettre les informations de capacité dans un élément d'informations de gestion de session, SM, de strate de non-accès, NAS, en liaison montante et recevoir les un ou plusieurs paramètres PTP dans un élément d'informations SM-NAS en liaison descendante.

10. Un procédé de communication sans fil au niveau d'un premier dispositif (506; 604), comprenant :
la transmission (702; 802), à un deuxième dispositif (502; 602), d'informations de capacité (510; 610) indiquant que le premier dispositif est capable de fonctionner en tant que grande horloge maître de protocole temporel de précision, PTP,
la réception (704; 804), à partir du deuxième dispositif (502; 602), d'un ou de plusieurs paramètres PTP (520; 620) en fonction des informations de capacité indiquant que le premier dispositif est capable de fonctionner en tant que grande horloge maître PTP,
la génération (540; 640; 706; 808), en fonction des un ou plusieurs paramètres PTP (520; 620) reçus du deuxième dispositif (502; 602), d'un premier message PTP (550; 650) contenant des informations temporelles, et
la transmission (708; 810) du premier message PTP (550; 650) contenant les informations temporelles à un ou plusieurs dispositifs en aval (508; 608) en communication avec le premier dispositif.

11. Un appareil de communication sans fil, comprenant :
une mémoire, et
au moins un processeur (1204) couplé à la mémoire et configuré de façon à :
recevoir (1002; 1102), à partir d'un premier dispositif (506; 604), des informations de capacité (510; 610) indiquant que le premier dispositif est capable de fonctionner en tant que grande horloge maître de protocole temporel de précision, PTP,
transmettre (1004; 1104), en fonction des informations de capacité reçues (510; 610), un ou plusieurs paramètres PTP (520; 620) au premier dispositif (506; 604), et
transmettre (1006, 1106), au premier dispositif (506; 604), un message d'activation (530, 630) destiné à permettre au premier dispositif (506; 604) de transmettre, en fonction des un ou plusieurs paramètres PTP (520; 620), des messages PTP (550; 650) à un ou plusieurs dispositifs en aval (508; 608) en communication avec le premier dispositif (506; 604), les messages PTP (550; 650) contenant des informations temporelles.

12. L'appareil selon la Revendication 1 ou 11, où :
les informations temporelles sont liées à une synchronisation absolue de trames radio en fonction d'une horloge système 5G, 5GS, ou
les un ou plusieurs paramètres PTP comprennent des informations de type de version PTP, ou
les informations de capacité comprennent des informations de type de version PTP.

13. L'appareil selon la Revendication 12, où, lorsque les informations de capacité comprennent des informations de type de version PTP, les informations de type de version PTP comprennent un élément parmi PTP/IEEE 802.1AS généralisé, PTP sur IEEE 802.3/Ethernet, PTP sur protocole de datagramme utilisateur, UDP, sur protocole Internet version 4, IPv4, et PTP sur UDP sur IPv6.

14. L'appareil selon la Revendication 11, où l'appareil comprend :
un équipement d'utilisateur, UE, et le premier dispositif comprend un convertisseur de mise en réseau sensible au temps, TSN, côté dispositif, DS, DS-TT ou
une station de base, et le premier dispositif comprend un UE.

15. L'appareil selon la Revendication 1 ou 11, comprenant en outre un émetteur-récepteur couplé au au moins un processeur.

16. Un procédé de communication sans fil au niveau d'un premier dispositif (502; 602), comprenant :
la réception (1002; 1102), à partir d'un deuxième dispositif (506; 604), d'informations de capacité (510; 610) indiquant que le deuxième dispositif (506; 604) est capable de fonctionner en tant que grande horloge maître de protocole temporel de précision, PTP,
la transmission (1004; 1104), en fonction des informations de capacité reçues (510; 610), d'un ou de plusieurs paramètres PTP (520; 620) au deuxième dispositif (506; 604), et
la transmission (1004; 1104), au deuxième dispositif (506; 604), d'un message d'activation (530, 630) destiné à permettre au deuxième dispositif (506; 604) de transmettre, en fonction des un ou plusieurs paramètres PTP (520; 620), des messages PTP (550; 650) à un ou plusieurs dispositifs en aval (508; 608) en communication avec le deuxième dispositif (506; 604), les messages PTP (550; 650) contenant des informations temporelles.
